# EUROPÄISCHE PATENTSCHRIFT

(11) **EP 2 986 852 B1**
(45) Veröffentlichungstag und Bekanntmachung des Hinweises auf die Patenterteilung: **04.01.2017**
(21) Anmeldenummer: 14723970.1
(22) Anmeldetag: 17.04.2014
(51) Int. Cl.: F04B 39/00, H02K 44/08

(54) **DRUCKLUFTSPEICHERKRAFTWERK MIT INDUKTIONSPUMPE SOWIE VERFAHREN ZUR HERSTELLUNG EINES SOLCHEN DRUCKLUFTSPEICHERKRAFTWERKS**
COMPRESSED AIR ENERGY STORAGE UNIT WITH INDUCTION PUMP AND METHOD FOR THE PRODUCTION OF SUCH A COMPRESSED AIR ENERGY STORAGE UNIT
CENTRALE D'ACCUMULATION D'AIR COMPRIMÉ COMPRENANT UNE POMPE À INDUCTION ET PROCÉDÉ DE FABRICATION DE CETTE CENTRALE D'ACCUMULATION D'AIR COMPRIMÉ

(30) Priorität: 19.04.2013 AT 3292013; 05.02.2014 AT 852014
(43) Veröffentlichungstag der Anmeldung: 24.02.2016
(73) Patentinhaber: Schneider, Alexander, 1050 Wien (AT)
(72) Erfinder: Schneider, Alexander, 1050 Wien (AT)
(74) Vertreter: Sonn & Partner Patentanwälte
(86) Internationale Anmeldenummer: PCT/AT2014/050095
(87) Internationale Veröffentlichungsnummer: WO 2014/169312

(56) Entgegenhaltungen:
- EP-A1- 1 657 048
- EP-A2- 2 450 549
- WO-A1-2008/139267
- DE-A1- 19 728 199
- US-A- 3 517 229
- US-A1- 2008 072 597
- US-A1- 2011 277 457
- US-B1- 6 183 206

## Beschreibung

Die Erfindung betrifft ein Druckluftspeicherkraftwerk mit einem elektrischen Eingangs-/Ausgangskreis, Kompressor- und Expansionsmitteln und einem künstlich hergestellten Druckluftspeicher, wobei die Kompressor- und Expansionsmittel eine Kolbenpumpe (200) aufweisen, die zwischen einem Pumpbetrieb und einem Generatorbetrieb umschaltbar ist. Ein derartiges Druckluftspeicherkraftwerk ist aus US der 2011/277457 A1 bekannt.

Um den Klimawandel zu stoppen, sollen erneuerbare Energieträger einen höheren Anteil im Energiemix erhalten. Das Problem dabei ist, dass das Energieangebot von Sonne und Wind nicht zeitgleich mit dem Energiebedarf ist. Wirtschaftliche Energiespeicher sind nicht in ausreichender Menge vorhanden. Daher sind nach wie vor kalorische Kraftwerke und nukleare Kraftwerke im Einsatz, um "Regelenergie" bereitzustellen. Es besteht daher ein Bedarf, den Anteil erneuerbarer Energie zu erhöhen und die Abhängigkeit von kalorischen und nuklearen Kraftwerken als "Regelenergie" bzw. "Ausgleichsenergie" zu vermindern.

Bekannt ist es, zur Speicherung von elektrischer Energie Druckluft und Wärme zu speichern. Frühere Druckluftspeicherkraftwerke, benützen geologisch geeignete unterirdische Hohlräume; sie sind daher in der Standortwahl, aber auch hinsichtlich des maximalen Arbeitsdruckes eingeschränkt. Vorteilhafter sind daher künstlich hergestellte Druckluftspeicher, die einen wesentlich höheren Arbeitsdruck erlauben. Dadurch ist die Energiedichte höher, die Bauweise kompakter und die Standortwahl leichter. Viele bisher vorgeschlagene Druckluftspeicherkraftwerke speichern überdies nicht oder nur teilweise die bei der Kompression entstehende Wärme, und sie müssen daher im Generatorbetrieb Wärme von außen, z.B. durch Verbrennung von Gasen, zuführen, damit der Generator nicht einfriert. Die Wirkungsgrade derartiger Druckluftspeicherkraftwerke sind daher zu gering, um eine wichtige wirtschaftliche Rolle in der "Energiewende" zu spielen.

Die EP 2 450 549 A2 beschreibt ein Druckstufen-Wärme-Speicherkraftwerk bzw. Energiespeicherverfahren zum zeitweiligen Speichern von Energie in Form von Druckenergie in einem kompressiblen Medium und in Form von Wärmeenergie. Diese Technik ermöglicht einen höheren thermodynamischen Wirkungsgrad als frühere Verfahren, wie sie z.B. in DE 2 636 417 A1, DE 2 541 501 A1, DD 118455 A1, DE 2 536 447 B2, DE 2 615 439 A1, DE 3 428 041 A1, EP 364 106 B1, US 4,630,436, US 4,523,432 und US 4,765,142 beschrieben sind. Dieser höhere Wirkungsgrad soll durch eine flexible Anordnung von mehreren Kompressoren, mehreren Wärmeaustauschvorrichtungen und mehreren Expansionsvorrichtungen, die durch zahlreiche Rohrleitungen unabhängig voneinander beliebig verbunden werden können, erreicht werden. Als vorteilhaft soll sich dabei die Möglichkeit erweisen, dass die Anzahl der Kompressionsvorrichtungen ungleich der Anzahl der Expansionsvorrichtungen sein kann. Insbesondere soll überschüssige Energie in Form von elektrischer, mechanischer und thermischer Energie vorteilhaft von außen zugeführt werden können. Im Gegensatz zu einer vergleichbaren Anordnung mit nur einer Kompressionsstufe und einer Expansionsstufe soll durch die mehrstufige Anordnung mit zwischengeschalteten Wärmetauschern der Wirkungsgrad signifikant gesteigert werden. Die Expansion und Kompression wird als adiabater Prozess angenommen, die mehrstufige Anordnung von Wärmetauschern und die Möglichkeit, überschüssige Energie von außen einzuspeisen, soll die Temperaturverluste bzw. die Energieverluste minimieren. Nachteilig ist dabei die höhere Komplexität der Anlage, was die Kosten für die Errichtung und den Betrieb erhöht. Die Wirtschaftlichkeit einer solchen Anlage ist u.a. von der Verfügbarkeit überschüssiger (Wärme-)Energie abhängig.

Ähnlich ist die in EP 2 489 840 A1 beschriebene Anlage zu bewerten, wobei hier ein isothermer Prozess angestrebt wird. Die Wärmeenergie wird nicht gespeichert, sondern mit der Umgebung ausgetauscht. Der maximale Speicherdruck beträgt 300 bar. Wenn keine externe Wärmequelle beim Entladen zur Verfügung steht ist der Wirkungsgrad mit 70% begrenzt.

Die vorliegende Erfindung soll nach Möglichkeit die gesamte bei der Kompression entstehende Wärme speichern und bei der Expansion möglichst vollständig wieder nützen. Eine zusätzliche Wärmequelle ist nicht vorgesehen. Ein möglichst hoher Wirkungsgrad und ein möglichst wirtschaftlicher Betrieb sind das Ziel.

Vor allem ist es ein Ziel der Erfindung, eine einfache und effiziente Konstruktion im Hinblick auf die Kompressor-/Expander-Ausbildung vorzusehen.

Hiefür sieht die Erfindung ein Druckluftspeicherkraftwerk wie in Anspruch 1 angegeben vor. Vorteilhafte Ausführungsformen sind in den abhängigen Ansprüchen angegeben.

Eingesetzt wird somit eine Kolbenmaschine, die sowohl als Pumpe als auch als Generator arbeitet. Die "Kolben" bestehen aus einer elektrisch und thermisch sehr gut leitfähigen Flüssigkeit, wie z.B. Galinstan, die "Zylinder" sind kommunizierende Gefäße, die die Flüssigkeit enthalten. Die flüssigen Kolben werden im Pumpbetrieb induktiv angetrieben. Im Generatorbetrieb treibt Druckluft die Kolben an, wobei die Kolben den Widerstand einer Erregerspannung überwinden und an den Klemmen der Spulenwicklung elektrische Arbeit leisten (in der Art eines magnetohydrodynamischen (MHD) Generators). Durch die laufende Umwälzung der Kolbenflüssigkeit findet ein vorteilhafter Wärmeaustausch zwischen dem Hubraum der Maschine und dem Wärmespeicher statt, der die bei der Kompression entstehende Wärme effektiv abführt und das Vereisen des Generators bei der Expansion verhindert.

Im Einzelnen sieht demgemäß die Erfindung ein Druckluftspeicherkraftwerk wie eingangs angegeben vor, bei dem die Kompressor- und Expansionsmittel eine Kolbenpumpe aufweisen, deren Kolben aus einer elektrisch und thermisch leitfähigen Flüssigkeit, z.B. Galinstan, bestehen, und die zwischen einem Pumpbetrieb und einem Generatorbetrieb umschaltbar ist, zum induktiven Antreiben der leitfähigen Flüssigkeit sind Elektromagnete mit einem Kern und Spulen vorgesehen; der Kern bildet dabei eine geschlossene Schleife, wobei die Schleife eine von einer Kreisringform abweichende Form hat, nämlich zwei parallele gerade Zylinder-Teile enthält, um die die Spulen gewickelt sind.

Der magnetische Kern kann dabei so ausgeführt werden, dass die Wirbelstromverluste minimal sind und die magnetische Energie maximal ist, etwa dadurch, dass der Kern aus parallelen isolierten Mumetalldrähten gebildet wird.

Zwischen dem magnetischen Kern und den (Erreger-)Spulen ist ein Spalt freigelassen, in dem sich die leitfähige Flüssigkeit nach der Art eines kommunizierenden Gefäßes gegensätzlich auf und ab bewegt. Dabei ist es weiters von Vorteil, wenn eine Trennwand den Spalt zwischen dem Kern und den Spulen in einen inneren, näher dem Kern gelegenen Spalt und einen äußeren, näher den Spulen gelegenen Spalt unterteilt, wobei die Trennwand an den beiden oberen Enden der parallelen Kern-Teile endet, so dass die leitfähige Flüssigkeit dort von einem Spalt in den anderen Spalt, unter Bildung eines Hubraums, fließen kann.

Das Volumen der leitfähigen Flüssigkeit kann in einem Zylinderrahmen der Kolbenpumpe, dem Hubraum - beispielsweise mithilfe eines an sich durchaus herkömmlich aufgebauten Reglers - regelbar sein, wobei die Leistungsaufnahme während der Druckluftspeicherung dann konstant ist. Mit besonderem Vorteil ist hier vorgesehen, dass die leitfähige Flüssigkeit mit einem Reservoir verbunden ist, dessen Volumen abhängig vom Luftdruck im Druckluftspeicher mittels eines Untersetzungs-Druckwandlers und einer hydraulischen Flüssigkeit änderbar ist, wobei die hydraulische Flüssigkeit gegen zumindest eine federnd ausgeführte Grenzfläche, z.B. eine Membran, drückt, auf deren anderer Seite sich das Reservoir der leitfähigen Flüssigkeit befindet. Die geometrische Anordnung zur Regelung des Hubraums, mit einem oder mehreren unterschiedlich großen Membrankörpern, sowie die Federkennlinie (n) der Grenzfläche(n) können dabei die erforderliche Nichtlinearität der Volumenänderung während des Betriebs genau nachbilden.

In Generatorbetrieb werden die Kolben des Generators, die aus der selben thermisch und elektrisch sehr gut leitenden Flüssigkeit bestehen, durch die Druckluft angetrieben, wobei die Flüssigkeit, d.h. die beide Kolben, in den Spulen eine Spannung induzieren, die an außen liegende Klemmen geführt ist, um dort die gewünschte elektrische Arbeit zu leisten.

Die einheitliche Maschine oder genauer Kolbenpumpe ist bevorzugt vollständig in einer Flüssigkeit, z.B. Wasser, eingetaucht, die als Wärmespeicher fungiert. Eine Umwälzpumpe kann die leitfähige Flüssigkeit im Betrieb ständig in einem geschlossenen Kreislauf umwälzen, wobei ein Wärmeaustausch zwischen der leitfähigen Flüssigkeit und dem Wärmespeicher stattfindet.

Im Betrieb ergibt sich, dass zwei Kolben in U-förmigen kommunizierenden Gefäßen vorliegen und miteinander verbunden sind, wobei diese Kolben wie erwähnt durch die leitfähige Flüssigkeit gebildet sind, und abwechselnd hebt sich ein Kolben, während sich der andere Kolben senkt, wobei das gesamte Kolbenvolumen während einer Arbeitsperiode konstant ist.

Von besonderem Vorteil ist es weiters, wenn je eine Induktions-Umwälzpumpe unterhalb der beiden Kern-Teile in jedem Halbtakt aus dem äußeren Spalt leitfähige Flüssigkeit periodisch und synchron absaugt und induktiv durch den Wärmetauscher treibt und schließlich in den inneren Spalt wieder hineindrückt.

Weiters ist es günstig, wenn das Reservoir, das das Volumen der leitfähigen Flüssigkeit regelt, gleichzeitig als Wärmetauscher fungiert, wobei drei diskusförmig gewölbte Räume aneinander angrenzend angeordnet sind, nämlich ein mittlerer Raum, dem die hydraulische Flüssigkeit zugeführt wird, und beidseits hievon, durch federnde Membranen von ihm getrennt, zwei Reservoir-Räume, die je von einer bauchig nach außen gewölbten Wand aus einem gut wärmeleitenden und hochtemperaturfesten Material, z.B. Borsilikatglas, bestehen.

Dabei ist es weiters vorteilhaft, wenn die Umwälzpumpen die leitfähige Flüssigkeit am unteren Ende der Wärmetauscher hineinpumpen, wobei am oberen Ende die abgekühlte bzw. im Generatorbetrieb erwärmte leitfähige Flüssigkeit über eine Rohrleitung wieder in die Kolbenpumpe zurückgeführt wird.

Zur Bildung des Wärmetauschers ist es günstig, wenn die leitfähige Flüssigkeit durch eine wendelförmige Wärmetauscher-Rohrleitung aus einem wärmeleitenden und hochtemperaturfesten Material, z.B. Borsilikatglas, innerhalb eines Wärmespeichers, ggf. des Flüssigkeits-Wärmespeichers, geführt wird.

Zur optimalen Nutzung der Wärmeenergie ist es auch günstig, wenn eine Druckrohrleitung, z.B. mäanderförmig, zwischen dem Druckluftspeicher und der Kolbenpumpe durch einen Wärmespeicher verläuft, wobei Wärmeenergie von der Druckluft in das Wärmespeichermedium oder umgekehrt übertragen wird.

Zur Druckluftsteuerung ist es vorteilhaft, wenn ein Druckventil und ein Saugventil in Form von konzentrischen Ringen den magnetischen Kern umschließen. Dabei ist es weiters günstig, wenn der Luftraum über dem Saugventil mittels einer Rohrleitung, die durch einen Wärmespeicher führt, mit der Umgebung verbunden ist. Die Rohrleitung führt dabei an der Oberseite aus dem Wärmespeicher heraus.

Zur Erzielung eines besonders hohen Wirkungsgrads ist es auch von Vorteil, wenn der Druckluftspeicher sowie gegebenenfalls der Wärmespeicher und die Druckrohrleitung von einer wärmeisolierenden Schicht umgeben sind.

Beim vorliegenden System bzw. Druckluftspeicherkraftwerk wird die Lärmabgabe unter anderem dadurch reduziert, dass durch die umgebende wärmespeichernde Flüssigkeit eine Schalldämmung erhalten wird. Auch wird Schalldämmung dadurch zusätzlich erzielt, dass die wärmedämmende Schicht den Wärmespeicher, d.h. die wärmespeichernde Flüssigkeit, allseitig umgibt. Zusätzlich kann bevorzugt vorgesehen werden, dass die zur Umgebung führende Rohrleitung innenseitig mit einer schalldämpfenden Beschichtung ausgestattet ist.

Von besonderem Vorteil ist es auch, wenn alle mechanisch festen Teile mit Ausnahme der Spulen, des Kerns und einer magnetischen Ventilsteuerung aus elektrisch nicht leitendem Material, z.B. Keramik, ausgeführt sind, um Wirbelstromverluste und Ummagnetisierungsverluste zu minimieren; in entsprechender Weise kann auch die Aufhängung der Maschine, das Gestell, aus einem solchen elektrisch nichtleitendem Material, wie insbesondere Keramik, hergestellt sein.

Zur Spannungsabgabe ist wie erwähnt eine elektrischer Kondensator vorgesehen, und dieser ist bevorzugt als Plattenkondensator mit kammförmig ineinandergreifenden Platen ausgeführt, die durch ein geeignetes Dielektrikum, z.B. Keramik, Glas oder Kunststoff, getrennt und dabei so auf Abstand gehalten sind, dass für den Kondensator eine Spannungsfestigkeit von 220 kV erzielt wird, wobei im Zusammenspiel mit den Spulen eine Resonanzfrequenz von 50 Hertz erhalten wird.

Das vorliegende Druckluftspeicherkraftwerk ist einfach im Aufbau, da es als Kern nur eine einzige Maschine aufweist, die gleichzeitig Motor, Kompressor, Expander und Generator ist. Diese eine Maschine leistet dasselbe, wofür gemäß EP 2 450 549 A2 neun Maschinen benötigt werden. Die gegenständliche Erfindung ist außerdem einfacher im Betrieb, wobei sie bis auf die Ventile keine Komponenten enthält, die einem Verschleiß Unterworfen sind. Die gegenständliche Erfindung erlaubt es (unter der Annahme, dass alle Prozesse verlustfrei ablaufen), den thermodynamischen Wirkungsgrad beliebig nahe an 100% heranzuführen, das allerdings auf Kosten der Leistungsaufnahme bzw. Leistungsabgabe. Der flüssige Kolben mit Umwälzung der Kolbenflüssigkeit verbessert den Wärmeübergang zwischen der Druckluft im Hubraum und der Umgebung des Hubraums. Die Kompression/Expansion ist in der gegenständlichen Erfindung kein rein adiabater Vorgang, wie gemäß EP 2 450 549 A2, sondern ein polytroper. Durch geeignete Feinabstimmung des i Kolbenhubraums als Funktion des Speicherdrucks (z.B. durch Veränderung der Gesamtmenge an Kolbenflüssigkeit im System oder durch Zufuhr/Abfuhr von hydraulischer Flüssigkeit von/nach außen) kann die Verweildauer der Druckluft im Hubraum beliebig verändert werden. Jedes differentielle Volumenelement der zu komprimierenden/expandierenden Luftmenge kann nicht nur einmal, sondern n mal komprimiert/expandiert werden, bevor es in den Speicher bzw. in die Umgebung entlassen wird. Je höher der Wert für n gewählt wird, d.h. je länger das Gas im Hubraum verweilt, desto öfter kann es mit frischer, umgewälzter Kolbenflüssigkeit Wärme austauschen. Je größer der Wert für n gewählt wird, desto mehr nähert sich die polytrope Kennlinie einer Isothermen an. Isotherme Kompression und Expansion ist bekanntermaßen gleichbedeutend mit einem Wirkungsgrad von 100%. Je höher der Wert für n gewählt wird, desto geringer ist der Energieaustausch zwischen Hubraum und Umgebung pro Kolbenhub, desto geringer ist die "Ausbeute" an gespeicherter Druckluftmenge pro Kolbenhub, desto länger dauert es, bis der Speicher geladen/entladen ist. Bei einem hohen Wert für n gibt es einen hohen Anteil an thermodynamischer "Blindleistung", die im System zwischen den Kolben hin und her pendelt, bzw. die zwischen maximaler Druckenergie im Gas (Luft) und maximaler kinetischer Energie im Kolben hin und her pendelt. Der Wärmeübergang/Wirkungsgrad kann außerdem durch Vergrößerung der Kolbenfläche im Verhältnis zum Kolbenhub verbessert werden. Die gegenständliche Erfindung erlaubt durch Feinjustierung einiger Parameter den optimalen Betriebspunkt im Sinne größtmöglicher Wirtschaftlichkeit einzustellen. Der optimale Kompromiss zwischen Leistung und Wirkungsgrad wird auch durch die Preise an der Strombörse bestimmt. Die Erfindung erlaubt es, bei Änderungen der Strompreise den jeweils optimalen Betriebspunkt jeweils neu einzustellen.

Zur Herstellung eines oben beschriebenen Druckluftspeicherkraftwerks können zumindest einige bzw. alle Bauteile durch 3D-Druck gefertigt werden, wobei der 3D-Drucker mit einem Gemisch aus Keramikpulver und Keramikfaserstücken in variablen Mischungsverhältnissen beschickt wird.

Vorteilhafterweise wird das Druckluftspeicherkraftwerk in kompakter und selbsttragender Bauweise gefertigt.

Die zwei Umwälzpumpen können auch durch eine zentral angeordnete kompakte Umwälzpumpe ersetzt werden, die mit der Hauptpumpe fest verbunden ist und die gleichzeitig eine mechanische Stützfunktion erfüllt.

Die Magnetkerne von Hauptpumpe und Umwälzpumpe werden vorzugsweise nicht gewickelt, sondern in Hohlräume des kompakten Bauteils hineingegossen, wobei die Hohlräume insbesondere einen sternförmigen Querschnitt aufweisen und die Bildung von Luftblasen durch Anlegen eines Unterdrucks im Hohlraum verringert wird.

Die druckführenden Teile können zur Verbesserung der Festigkeit mit Fasern bzw. Seilen in mehreren Lagen umwickelt werden; auch können danach diese Fasern bzw. Seile in eine aushärtende Matrix eingegossen bzw. mit einer aushärtenden Matrix umhüllt werden.

Zur Umwicklung der druckführenden Teile kann eine eigens zu diesem Zweck ausgebildete Wickelmaschine eingesetzt werden.

Die Vorrichtung zur Umschaltung zwischen Pumpbetrieb und Generatorbetrieb kann oberhalb der Ventile angeordnet werden, sodass eine Umwicklung mit Fasern sowohl der Umschaltevorrichtung als auch der Maschine im Bereich des Hubraums und der Ventile möglich ist.

Durch eine Verbesserung des Hubraumreglers ist eine Umwicklung mit Fasern möglich.

Vorteilhafterweise werden am äußeren Rand vier Standbeine angeordnet, welche die Anlage stützen und den wendelförmigen Wärmetauscher tragen.

Der wendelförmige Wärmetauscher kann aus Teilstücken gefertigt werden die aus Viertelkreissegmenten bestehen. Diese Viertelkreissegmenten werden jeweils mit einem Fasergewebeschlauch und dann mit einer aushärtenden Matrix umhüllt bevor sie in passende Öffnungen an den vier Standbeinen eingesetzt und fest verbunden beispielsweise angeschweißt werden.

Weiters kann eine Vorrichtung zur Be- und Entlüftung des Hubraumreglers angeordnet werden. Diese Vorrichtung zur Be- und Entlüftung ist in der Funktionsweise ähnlich der Umschaltvorrichtung.

Der Hubraumregler kann oberhalb der Maschine angeordnet werden. Dadurch werden die folgenden Vorteile erzielt:
- Die hydraulische Flüssigkeit schwimmt direkt auf der Kolbenflüssigkeit wegen des geringeren spezifischen Gewichts und vermischt sich nicht mit ihr.
- Das Mischungsverhältnis von Keramikpulver und Keramikfaserstücken kann im 3D-Drucker speziell für die Fertigung des Hubraumreglers verändert werden: Z.B. kann der Drucker bis zum oberen Rand der Pumpe nur mit Keramikpulver beschickt werden, um möglichst glatte Oberflächen zu erzielen, und oberhalb mit einer Mischung aus Keramikpulver und Faserstücken, um einen dehnbaren Körper mit höherer Bruchdehnung zu erhalten.

Wenn Wärmetauscherlamellen im Hubraum eingesetzt werden, kann der Wärmeaustausch zwischen Gas und Umgebung im Hubraum verbessert werden und durch Annäherung an den isothermen Prozess der Wirkungsgrad erhöht werden.

Bei der Bewicklung der elektrischen Spulen dreht sich beispielsweise ein beweglicher Spulenkörper in einem festen Rahmen bzw. ebenen Untergrund. Zwischen dem Boden des Spulenkörpers und dem festen Rahmen besteht ein kleiner Luftspalt, in dem während der Bewicklung Keramikkugeln rollen, die den Spulenkörper tragen. Im festen Rahmen ist eine kreisförmige Rinne in der die Kugeln rollen. Nach dem Ende des Bewicklungsvorgangs wird der Luftraum zwischen Spulenkörper und Rahmen samt Kugeln mit einer aushärtbaren Matrix (z.B. Beton) gefüllt. Der Boden des Spulenkörpers kann an seinem Umfang außen Zähne tragen sodass die Bewicklung mit Hilfe eines Zahnradantriebs durchgeführt werden kann.

Die Erfindung wird nachfolgend anhand von bevorzugten Ausführungsbeispielen, auf die sie jedoch nicht beschränkt sein soll, und unter Bezugnahme auf die Zeichnungen noch weiter erläutert. Darin zeigen:
Fig. 1 eine schematische Darstellung des gesamten Druckluftspeicherkraftwerks;
Fig. 1A ein zugehöriges elektrisches Ersatzschaltbild;
Fig. 2 schematisch eine Kolbenmaschine ("Induktionspumpe") des Druckluftspeicherkraftwerks mit ihren peripheren Komponenten Hubraumregler und Wärmetauschkreislauf;
Fig. 3 schematisch diese Kolbenmaschine ("Induktionspumpe") vergrößert und ohne periphere Komponenten;
Fig. 4 einen Querschnitt durch den weichmagnetischen Kern, die Spulenwicklung und den inneren und den äußeren Luftspalt dieser Kolbenmaschine, gemäß der Linie IV-IV in Fig. 3;
Fig. 5 einen Querschnitt durch den weichmagnetischen Kern, den Hubraum und das Planetengetriebe jener Vorrichtung der Kolbenmaschine, die zwischen Pumpbetrieb und Generatorbetrieb umschaltet, gemäß der Linie V-V in Fig. 3;
Fig. 6 in einem Detail VI gemäß Fig. 3 einen vergrößerten Längsschnitt durch ein Druck- und Saugventil samt Federn und Steuermagneten, wobei beide Ventile geschlossen sind;
Fig. 7 eine Darstellung wie Fig. 6, jedoch mit geöffnetem Druckventil;
Fig. 8 eine Darstellung wie Fig. 6, jedoch mit geöffnetem Saugventil;
Fig. 9 einen vergrößerten Längsschnitt durch das Druckventil samt Steuermagnet, wobei die Ansicht gegenüber Fig. 6 um 90° gedreht ist;
Fig. 10 einen vergrößerten Längsschnitt durch das Saugventil samt Steuermagneten, wobei die Ansicht gegenüber Fig. 6 um 90° gedreht ist; und
Fig. 11 schematisch einen thermodynamischen Kreisprozess;
Fig.12 eine Darstellung der Maschine in kompakter Bauweise;
Fig.13 eine Darstellung die gegenüber Fig.12 um 90 Grad gedreht ist;
Fig.14 einen Querschnitt durch die mittig unter der Maschine angeordnete kompakte Umwälzpumpe sowie durch die vier Träger samt wendelförmigem Wärmetauscher;
Fig.15 einen Querschnitt durch den verbesserten Hubraumregler;
Fig.16 einen Querschnitt durch einen Schenkel der Maschine mit dem sternförmigen magnetischen Kern;
Fig.17 die schematische Darstellung einer möglichen Ausführung der Wickelmaschine;
Fig.18 eine vergößerte Darstellung der verbesserten Umschaltevorrichtung;
Fig.19 wie Fig.18 aber mit dem unteren Ventil in geöffneter Position;
Fig.20 wie Fig. 18 aber mit dem oberen Ventil in geöffneter Position; und
Fig.21 einen Querschnitt durch die Maschine in der Höhe des Hubraums mit sternförmig angeordneten Wärmetauscherlamellen.

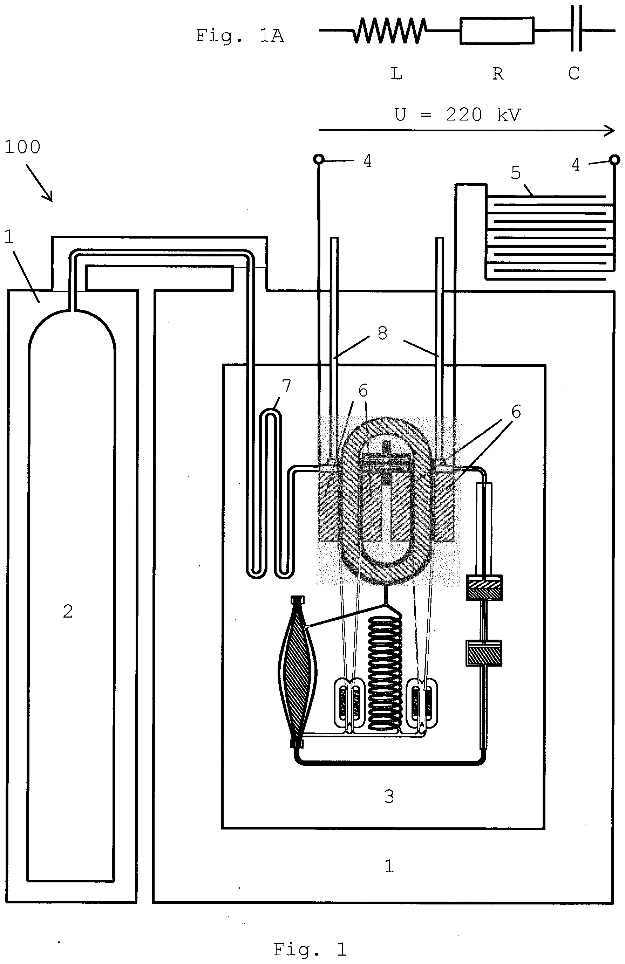

In Fig. 1 ist ein Beispiel eines Druckluftspeicherkraftwerks 100 mit einer die Funktion eines Kompressors und Expanders ausübenden Kolbenpumpe 200 schematisch dargestellt: Eine wärmeisolierende Schicht 1 umgibt einen (künstlichen) Druckluftspeicher 2 und eine wärmespeichernde Flüssigkeit 3, die z.B. aus Wasser besteht. Die Kolbenpumpe 200 ist in der Flüssigkeit eingetaucht und allseitig von dieser umgeben.

Aus elektrotechnischer Sicht liegt ein R-L-C Serienschwingkreis vor; vgl. Fig. 1A. An externen Klemmen 4 als Eingangs- und Ausgangskreis wird eine 220 kV-Wechselspannung U angelegt. Die Kapazität C wird durch einen Kondensator 5 gebildet, der außerhalb der wärmeisolierenden Schicht 1 angeordnet ist. Der Kondensator 5 ist als geschichteter Plattenkondensator mit einer Spannungsfestigkeit deutlich höher als 220 kV ausgeführt. Die Platten des Kondensators 5 sind so verbunden, dass die Pole des Kondensators 5 kammartig ineinander greifen und das Dielektrikum einen mäanderförmigen Raum zwischen den Elektroden ausfüllt. Die Induktivität L wird durch eine spulenförmige Wicklung 6 der Kolbenpumpe 200 gebildet. Der elektrische Wirkwiderstand R ergibt sich durch die mechanische Arbeit, die bei der Kompression der Luft geleistet wird. Die Induktivität L der Spule 6 und die Kapazität C des Kondensators 5 sind so dimensioniert, dass die Resonanzfrequenz der Netzfrequenz von 50 Hertz (oder ggf. 60 Hertz, z.B. in den USA) entspricht.

Das Druckluftspeicherkraftwerk 100 arbeitet somit ohne Spannungsumsetzung direkt mit 220kV Wechselspannung am Eingang/Ausgang 4, wozu es günstig ist, wenn alle Teile, insbesondere die Spulenwicklung 6, sorgfältig doppelt isoliert und wasserdicht ausgeführt sind.

Die komprimierte Luft strömt durch eine Druckrohrleitung 7 zwischen der Kolbenpumpe 200 und dem Druckluftspeicher 2. Um den Wärmeaustausch zu optimieren, ist die Druckrohrleitung 7 innerhalb des Wärmespeichers 3 mäanderförmig ausgeführt. Eine Rohrleitung 8 verbindet die Kolbenpumpe 200 mit der Umgebungsluft. Um die Lärmabgabe zu minimieren, kann die nach außen führende Rohrleitung 8 an der Innenseite mit einem schalldämpfenden Material beschichtet sein. Außerdem wirken der Wärmespeicher 3 und die Wärmeisolierung 1 gleichzeitig als Schalldämmung.

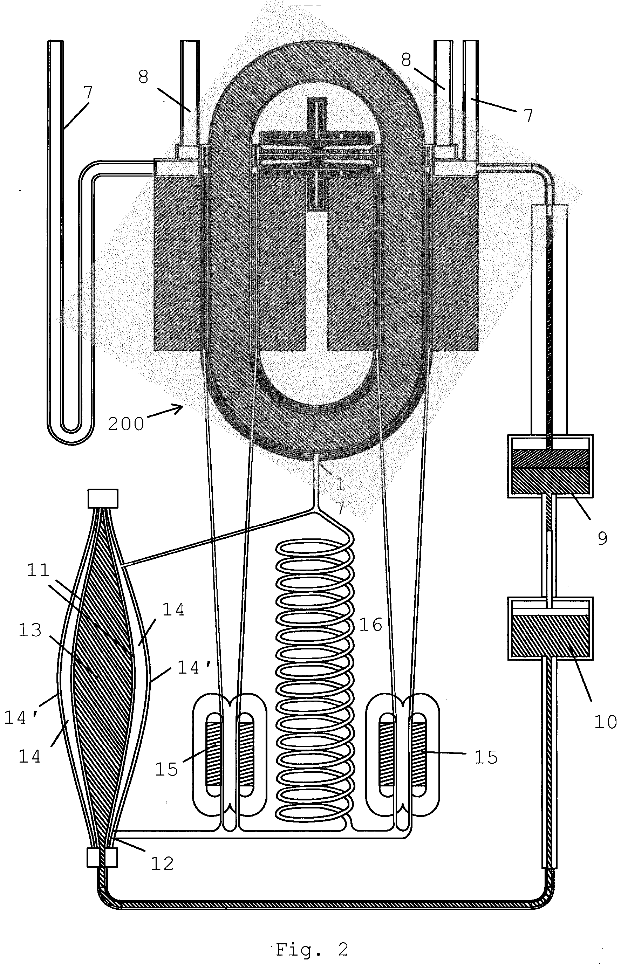

In Fig. 2 ist die Kolbenpumpe 200 samt ihren peripheren Komponenten schematisch dargestellt. Ein Druckwandler 9 untersetzt den Arbeitsdruck der komprimierten Luft (Druckrohrleitung 7) proportional auf den Druck einer hydraulischen Flüssigkeit 10, die den Druck auf zwei Membranfedern 11 weitergibt. Die Membranfedern 11 unterteilen einen diskusförmigen Körper 12 in einen inneren (mittleren) Bereich 13 und zwei äußere Bereiche 14 (rechts und links des mittleren Bereichs 13).

Unterhalb von zwei Schenkeln der Kolbenpumpe 200 befinden sich zwei kleine Umwälzpumpen 15. Diese Umwälzpumpen 15 treiben eine noch näher zu beschreibende Kolbenflüssigkeit durch einen Wärmetauscherkreislauf, der den rechten und den linken Schenkel der Kolbenpumpe 200 in einer geraden Leitung nach unten fortsetzt, durch die Umwälzpumpen 15 führt und sich danach in zwei Leitungen verzweigt: Ein Zweig führt von unten durch die äußeren Bereiche 14 des diskusförmigen Körpers 12 nach oben. Der andere Zweig führt durch einen wendelförmigen Wärmetauscher 16 nach oben. Oberhalb der beiden Körper 12 und 16 vereinigen sich die beiden Leitungen bzw. Zweige zu einer Leitung, die an einem unteren Scheitelpunkt 17 der Kolbenpumpe 200 mittig wieder in die letztere eintritt.

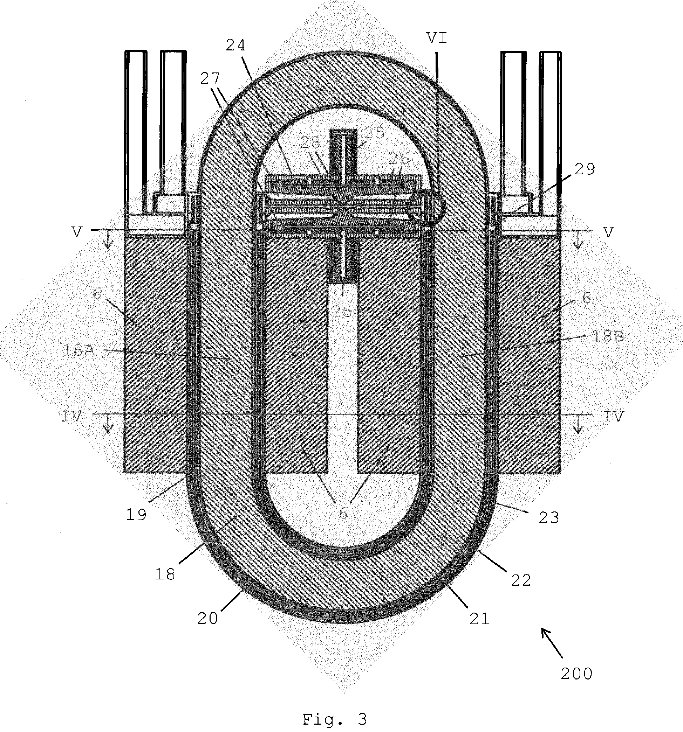

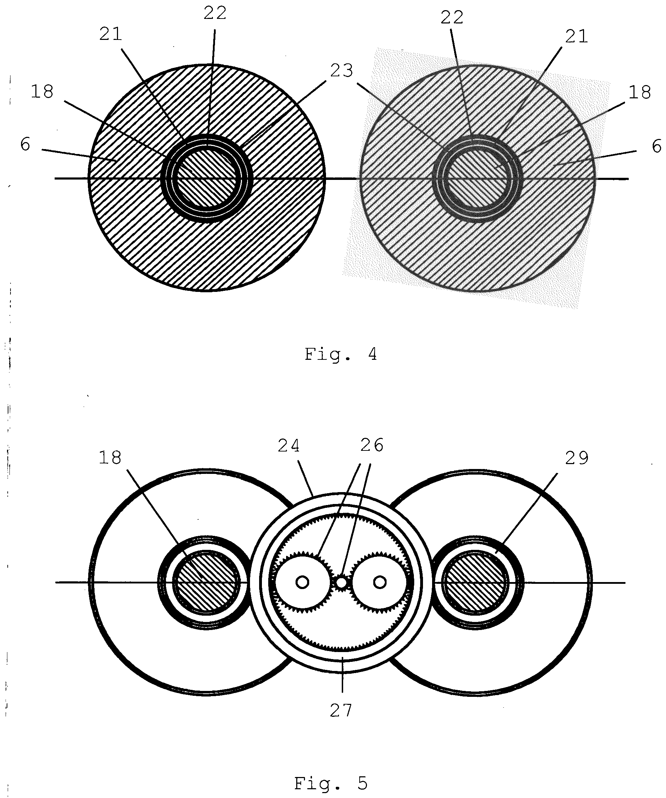

In Fig. 3 ist die Kolbenpumpe 200 ohne periphere Komponenten vergrößert dargestellt: Sie weist einen weichmagnetischen Kern 18 in Form eines aufgeschnittenen Torus auf, in den zwei parallele Teile, nämlich Zylinder-Teile 18A, 18B eingefügt sind. Der in Fig. 3 gezeigt Aufriss des Kerns 18 hat somit die Form eines Stadions. Der Kern 18 ist so aufgebaut, dass Wirbelstromverluste minimal sind, z.B. in Form von parallelen isolierten Mumetalldrähten oder aus geschichtetem Trafoblech. Der Kern 18 ist außerdem so aufgebaut, dass der magnetische Fluss maximal und der magnetische Widerstand minimal wird, d.h. z.B. ohne Stoßstellen oder Luftspalte in Richtung des magnetischen Flusses. Die zylinderförmigen Teile 18A, 18B des Kerns 18 sind mit isoliertem Draht zur Bildung der Spulen 6 umwickelt. Zwischen dem Kern 18 und den Spulen 6 befindet sich jeweils ein ringförmiger Spalt 19. Die beiden Spulen 6 sind durch ein U förmiges Rohr 20 verbunden, das den magnetischen Kern 18 konzentrisch umgibt. Der Luftraum 19 zwischen den U-förmig verbundenen Spulen 6 und dem Kern 18 ist durch eine Trennwand 21 in einen inneren, näher beim Kern 18 liegenden Spalt 22 und einen äußeren, näher beim Spulenkörper gelegenen Spalt 23 unterteilt; vgl. auch Fig. 4. Diese beiden Spalte 22 und 23 stellen zwei konzentrische kommunizierende Gefäße dar.

Zwischen den parallelen Teilen 18A, 18B des Kerns 18 oberhalb der Spulenkörper 6 befindet sich eine Umschaltvorrichtung 24 mit zwei Stellmotoren 25, die über je ein Planetengetriebe 26 je eine Scheibe 27 antreiben, vgl. auch Fig. 5; jede Scheibe 27 trägt im Zentrum eine kegelstumpfförmige Erhebung 28 und an der Außenseite ein Gewinde, das in einem Innengewinde des Gehäuses der Umschaltvorrichtung 24 gleitet.

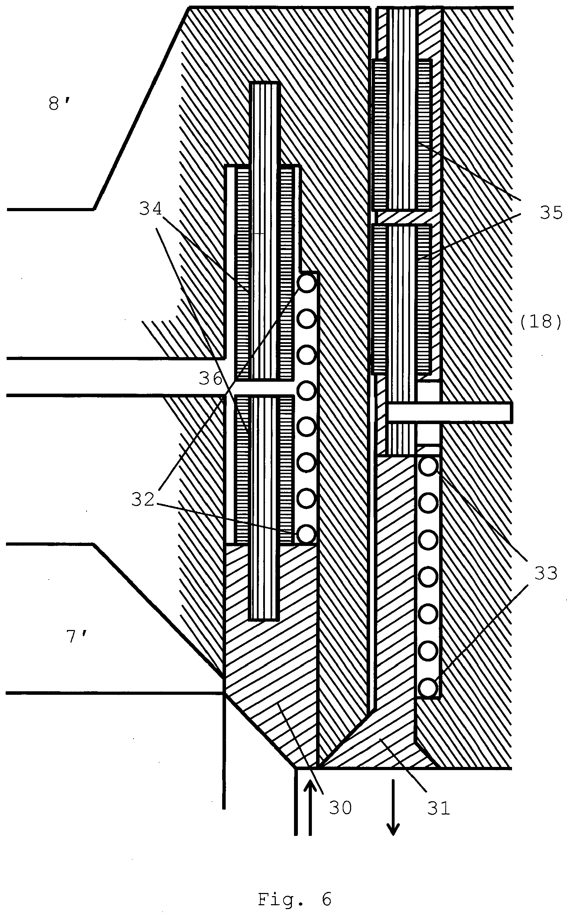

In Fig. 6 ist ein Detailbereich (s. Detail VI in Fig. 3) der Kolbenpumpe 200 vergrößert dargestellt: Ein Hubraum 29 der Kolbenpumpe 200 (s. Fig. 3) ist nach oben durch zwei Ventile abgeschlossen, nämlich ein Druckventil 30 und ein Saugventil 31. Beide Ventile 30, 31 sind als konzentrische Ringe um den magnetischen Kern 18 ausgeführt. Beide Ventile 30, 31 werden durch die Kraft von je einer Feder 32 bzw. 33 geschlossen gehalten. Die Feder 32 hält das Druckventil 30 geschlossen, die Feder 33 hält das Saugventil 31 geschlossen. Beide Ventile 30, 31 tragen mehrere ringförmig angeordnete Elektromagnete 34 bzw. 35, die die Ventile 30, 31 gegen die Federkraft öffnen können. Die Elektromagnete 34 öffnen das Druckventil 30, die Elektromagnete 35 öffnen das Saugventil 31.

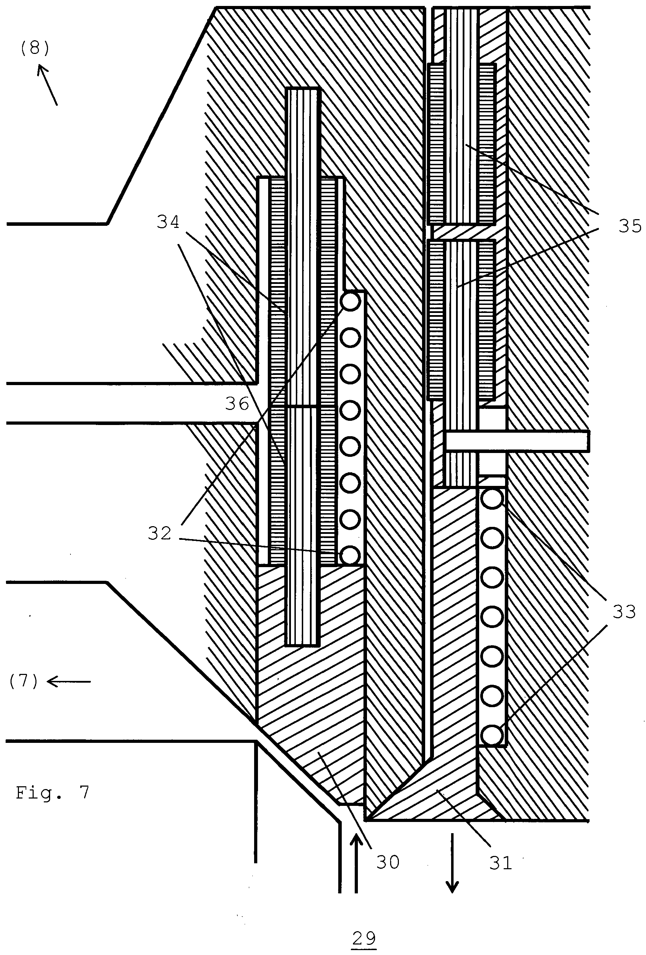

In Fig. 7 ist das Druckventil 30 in geöffneter Position dargestellt: Der Hubraum 29 ist mit dem Druckluftspeicher 2 verbunden, wie durch den Pfeil (7), hinweisend auf die Druckleitung 7, angedeutet ist.

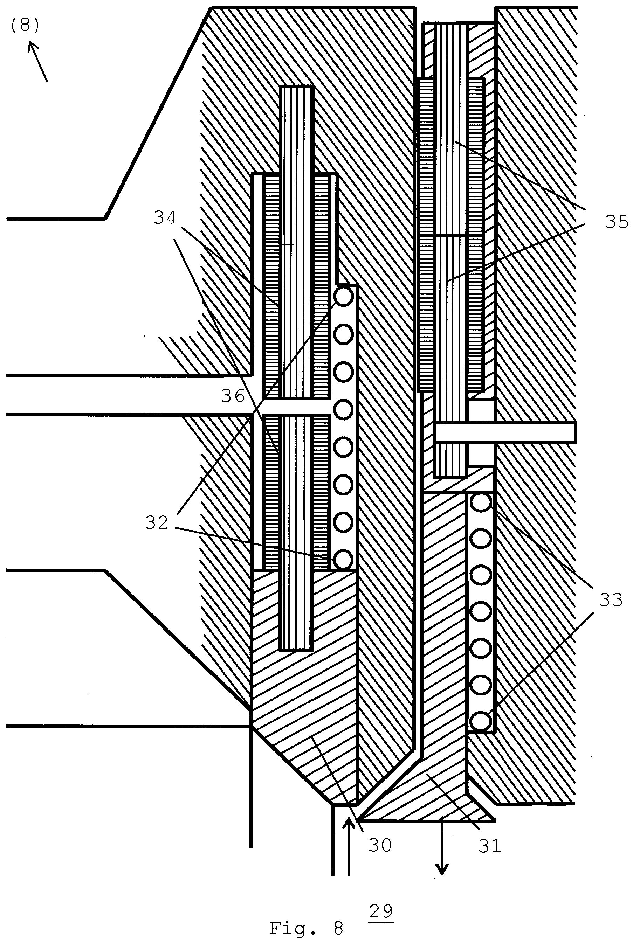

In Fig. 8 ist das Saugventil 31 in geöffneter Position dargestellt: Der Hubraum 29 ist mit der Umgebungsluft (Pfeil (8); vgl. die Rohrleitung 8) verbunden.

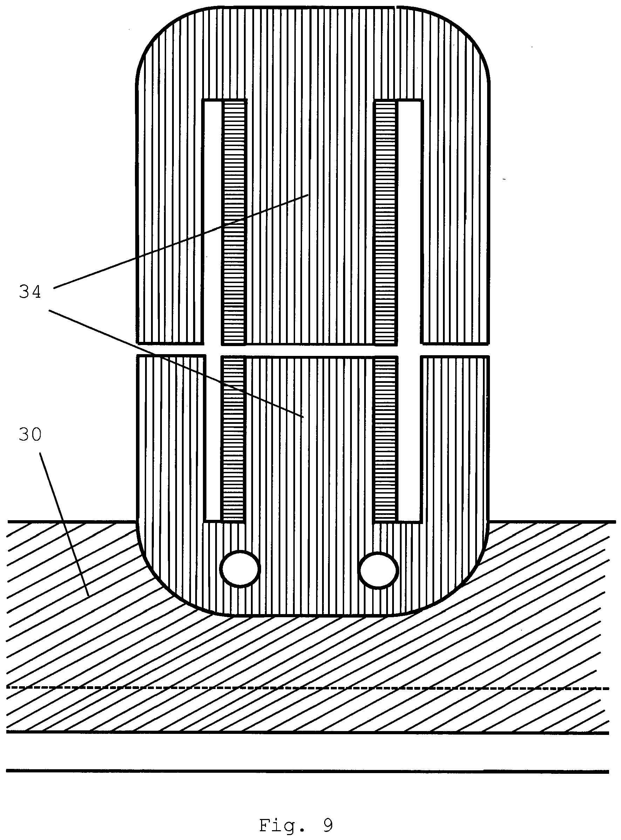

In Fig. 9 ist ein Teil des Druckventils 30 in Innenansicht bzw. Projektion dargestellt, so dass die Form eines der ringförmig angeordneten Elektromagnete 34 sichtbar ist. Die Blickrichtung ist gegenüber Fig. 6 um 90° gedreht, d.h. radial von innen nach außen.

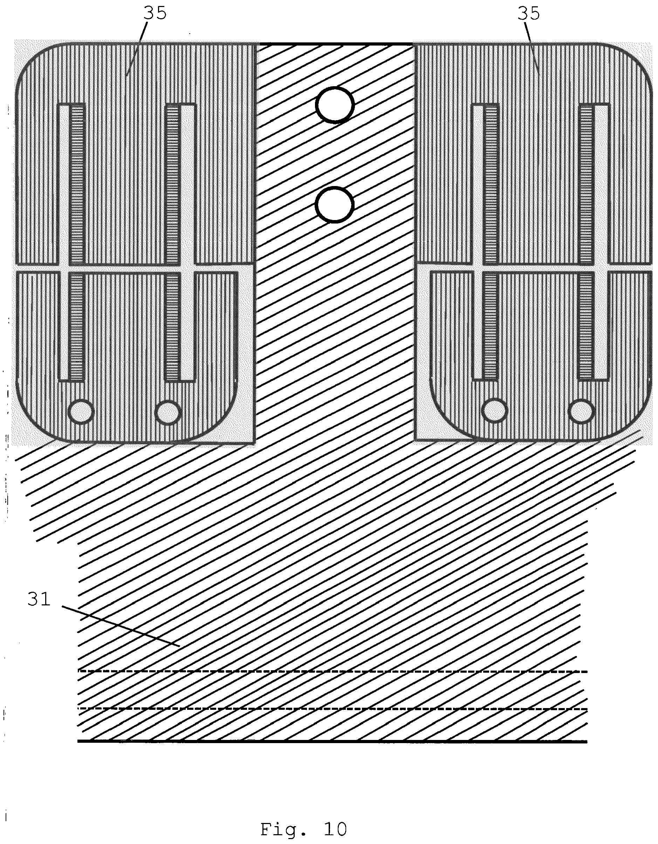

In Fig. 10 ist ein Teil des Saugventils 31 in Projektion dargestellt, so dass die Form von zwei der ringförmig angeordneten Elektromagnete 35 sichtbar ist. Die Blickrichtung ist gegenüber Fig. 6 um 90° gedreht, d.h. ebenfalls radial auswärts.

Nach der vorstehenden grundsätzlichen Erläuterung der Bauweise des vorliegenden Druckluftspeicherkraftwerks 100 soll nun eine Beschreibung des Betriebs des Druckluftspeicherkraftwerks 100 folgen, wobei sich weitere konstruktive Details ergeben.

Der Spalt 19 zwischen den Spulen 6 und dem Kern 18 (vgl. Fig. 3) wird mit der thermisch und elektrisch leitfähigen Flüssigkeit, z.B. Galinstan, gefüllt. Im Ruhezustand ist der Flüssigkeitsspiegel in beiden Schenkeln der kommunizierenden Röhren (entsprechend den Kernteilen 18A, 18B) gleich hoch.

Ein Ende der einen Spule 6 ist mit einem Ende der anderen Spule 6 so verbunden, dass die beiden Spulen 6 zusammen eine einzige Wicklung um den magnetischen Kern 18 bilden. Die magnetischen Flüsse der verbundenen Spulen 6 durch den Kern 18 verlaufen immer in dieselbe Richtung, entweder im Uhrzeigersinn oder gegen den Uhrzeigersinn. An den beiden Klemmen 4 (Fig. 1) wird eine Wechselspannung von 220 kV mit einer Frequenz von 50 Hertz angelegt. Diese Wechselspannung induziert ein Magnetfeld und einen zugehörigen magnetischen Fluss im Kern 18 der Kolbenpumpe 200, dessen Richtung sich 50 mal pro Sekunde umkehrt, abwechselnd im Uhrzeigersinn und gegen den Uhrzeigersinn.

Die Änderung des magnetischen Flusses im Kern 18 induziert ihrerseits eine ringförmig um den Kern 18 verlaufende und mit dem Kern 18 verkettete elektrische Wechselspannung in der in Spalt 19 befindlichen elektrisch leitfähigen Flüssigkeit. Der damit verbundene elektrische Strom in dieser Flüssigkeit induziert ein Magnetfeld, welches dem Magnetfeld im Kern 18 entgegengesetzt ist. Wenn das Magnetfeld im Kern 18 im Uhrzeigersinn verläuft, dann verläuft das durch den elektrischen Strom in der Flüssigkeit erzeugte Magnetfeld gegen den Uhrzeigersinn und umgekehrt. Auf jedes differentielle Volumenelement der Flüssigkeit wird eine gleich große Lorentz-Kraft ausgeübt. Das verursacht im kommunizierenden Gefäß eine laminare Strömung ohne Wirbel, wobei sich die Flüssigkeit in einem Schenkel hebt, während sie sich im anderen Schenkel senkt. Dieses System wirkt somit als Kolbenpumpe oder Kolbenmaschine mit einem flüssigen Kolben. Die bei der (weiter unten noch näher erläuterten) Verdichtung entstehende Wärme wird dadurch abgeführt bzw. beim Generatorbetrieb notwendige Wärme wird dadurch zugeführt, dass die Kolben-Flüssigkeit während des Betriebs laufend umgewälzt und durch den Wärmetauscher 16 getrieben wird. Durch die laufende Umwälzung der Kolbenflüssigkeit in einem Kreislauf wird vermieden, dass immer die gleichen Moleküle der Flüssigkeit an der Grenze zwischen Kolben und Luft sind. Die Umwälzung der Kolben-Flüssigkeit wird dadurch erreicht, dass der mit elektrisch leitfähiger Flüssigkeit gefüllte Spalt 19 durch die konzentrische Trennwand 21 in die zwei konzentrischen Spalten 22, 23 geteilt ist, vgl. außer Fig. 3 auch Fig. 4. Diese Spalten 22, 23 sind nur am oberen Ende des Hubraums 29 beider "Kolben" so verbunden, dass die Kolben-Flüssigkeit vom inneren Spalt 22 in den äußeren Spalt 23 (und umgekehrt) übertreten kann. Das im Pumpbetrieb erhitzte (bzw. im Generatorbetrieb gekühlte) Kolbenvolumen wird in jeder Arbeitsperiode (also 50 mal pro Sekunde) durch die Umwälzpumpe 15 ausgetauscht. Die kleine Umwälzpumpe 15 funktioniert genauso wie die große Druckluftpumpe (s. Fig. 6 bis 10) durch Induktion, nur im kleineren Maßstab. Sie saugt die Kolbenflüssigkeit aus dem äußeren Spalt 23 nach unten ab, treibt sie kontinuierlich durch die Wärmetauscher 12, 16 durch und danach am unteren Scheitelpunkt 17 in den inneren Spalt 22 von unten wieder hinein.

Nachdem die komprimierte erwärmte Luft am geöffneten Druckventil 30 (Fig. 6, 7) vorbeigeströmt ist, wird sie in der Druckrohrleitung 7 durch den Wärmespeicher 3 geführt, damit sie ihre Wärme abgeben kann. Umgekehrt kann die aus dem Druckluftspeicher 2 einströmende Luft Wärme aus dem Wärmespeicher 3 aufnehmen, bevor sie sich im Hubraum 29 des dann als Generator funktionierenden Systems entspannt und abkühlt.

Um die Leistungsaufnahme im Pumpbetrieb (Ladevorgang) konstant zu halten, wird das Volumen des Hubraums 29 geregelt. Bei niedrigem Arbeitsdruck (z.B. 100 bar) ist der Kolben-Flüssigkeitsspiegel niedrig, der Hubraum 29 somit groß. Bei hohem Arbeitsdruck (z.B. 1000 bar) ist der Kolben-Flüssigkeitsspiegel hoch, der Hubraum 29 somit klein. Die Regelung des Hubraumvolumens erfolgt durch den als Volumenregler fungierenden Körper 12, der im Inneren durch die zwei Membranfedern 11 wie erwähnt in den mittleren (inneren) Bereich 13 und die zwei äußeren Bereiche 14 getrennt ist (vgl. Fig. 2). Die Membranfedern 11 bauchen sich aus, wenn im mittleren Bereich 13 der Druck steigt. In diesem Bereich 13 befindet sich die hydraulische Flüssigkeit 10, deren Druck mit Hilfe des Druckwandlers 9 dem Arbeitsdruck proportional nachgeregelt wird. In den äußeren Bereichen 14 des diskusförmigen Körpers 12 befindet sich die Kolbenflüssigkeit, die aus den Bereichen 14 teilweise verdrängt wird, wenn sich die Membranfedern 11 ausbauchen und dadurch das Volumen im Bereich 14 verkleinern. Steigt der Arbeitsdruck, wird Kolbenflüssigkeit vom Raum 14 durch die Öffnung 17 in den Spalt 19 gedrängt und dadurch der Hubraum 29 verkleinert. Die Federkennlinie und die Abmessungen der Membranfedern 11 sind vorzugsweise so gewählt, dass der Hubraum 29 mit dem Arbeitsdruck so geregelt wird, dass die aufgenommene Leistung im Pumpbetrieb konstant ist.

Das System kann somit als Pumpe oder als Generator arbeiten. Im Pumpbetrieb wird elektrische Energie aufgewendet, um eine Verdichtungsarbeit im Hubraum 29 oberhalb des Flüssigkeitsspiegels zu leisten. Dabei wird die im Hubraum 29 eingeschlossene Luft soweit verdichtet, bis der Druck höher ist als der Druck im Druckluftspeicher 2. Dadurch wird das Druckventil 30 (s. Fig. 6 und 7) oberhalb der Kolben-Flüssigkeit gegen die Kraft der Feder 32 geöffnet, und die verdichtete Luft strömt über die Druckrohrleitung 7 in den Druckluftspeicher 2. Im Pumpbetrieb reicht dabei allein der Druckunterschied aus, um das Druckventil 30 zu öffnen, wobei der Druck im Hubraum 29 die Kraft der Feder 32 überwindet, die das Druckventil 30 nach dem Takt wieder schließt.

Während in einem "Zylinder" Luft verdichtet wird, wird im anderen Zylinder frische Luft von außen angesaugt, indem der entstehende Unterdruck im Hubraum 29 des anderen Zylinders das Saugventil 31 gegen die Kraft der Feder 33 öffnet, vgl. Fig. 8.

Im Generatorbetrieb wird an die Klemmen 4 eine Erregerspannung von außen angelegt. Diese Erregerspannung kann vom Netz mit dem das gegenständliche Druckluftspeicherkraftwerk im Verbundbetrieb arbeitet bereitgestellt werden. Bei einem Netzausfall kann die Erregerspannung durch ein autarkes konventionelles System (z.B. Dieselgenerator plus Trafo) erzeugt werden. Mehrere (z.B. acht) Elektromagnete 34 öffnen das Druckventil 30, indem die Kraft der Feder 32 überwunden wird. Beim Abschalten der Spannung an den Magneten 34 schließt (senkt) die Kraft der Feder 32 gemeinsam mit der Schwerkraft das Druckventil 30. Während in einem Zylinder die Magnete 34 das Druckventil 30 öffnen, öffnen mehrere (z.B. acht) Elektromagnete 35 im anderen Zylinder das Saugventil 31, um die abgearbeitete Luft bei Umgebungsdruck ins Freie zu entlassen (s. Rohrleitung 8), indem sie die Kraft der Feder 33 überwinden und das Saugventil 31 nach unten drücken. Beim Abschalten der Spannung an den Magneten 35 schließt (hebt) die Federkraft das Saugventil 31, das somit schließt. Gleichrichter (nicht gezeigt) können an den Elektromagneten 34 und 35 je eine Halbwelle jeder Periode der sinusförmigen Wechselspannung unterdrücken. Beispielsweise liegt die erste Halbwelle jeder Sinusperiode an den Elektromagneten an, die das rechte Druckventil und das linke Saugventil öffnen, während die zweite Halbwelle jeder Sinusperiode an den Elektromagneten anliegt, die das linke Druckventil und das rechte Saugventil öffnen. Der Vorgang des Öffnens und Schließens erfolgt durch Heben und Senken der Ventile 30, 31 synchron mit der Erregerspannung 50 mal pro Sekunde. Die einströmende Druckluft verrichtet im Generatorbetrieb mechanische Arbeit, um den elektromagnetischen Widerstand zu überwinden. Dadurch kommt es an den äußeren Klemmen 4 zu einem Stromfluss, der der dortigen elektrischen Erregerspannung entgegengesetzt ist. Es liegt somit eine Spannungsquelle vor, die elektrische Leistung nach außen abgeben kann.

Im Generatorbetrieb öffnen somit die Elektromagnete das Druckventil 30, um Druckluft aus dem Druckluftspeicher 2 in den Hubraum 29 des Zylinders einströmen zu lassen, bzw. senken die Elektromagneten 35 das Saugventil 31, damit die Luft nach dem Arbeitstakt bei Umgebungsdruck zur Umgebung ausgeblasen wird.

Der Raum 36 oberhalb des Druckventils 30 ist je nach Betriebsart mit dem Druck des Druckluftspeichers 2 oder dem Umgebungsdruck verbunden.

Damit die Maschine wahlweise als Pumpe wie auch als Generator arbeiten kann, ist es notwendig, dass der Luftraum 36 (s. Fig. 6) oberhalb des Druckventils 30 wahlweise mit dem Arbeitsdruck (z.B. 100 - 1000 bar) oder mit dem Umgebungsdruck (1 bar) verbunden werden kann. Im Pumpbetrieb ist der Luftraum 36 oberhalb des Druckventils 30 mit dem Arbeitsdruck im Druckluftspeicher 2 verbunden. Erst wenn der Druck im Kolben, d.h. Hubraum 29, höher ist, wird das Druckventil 30 gegen die Federkraft geöffnet. Im Generatorbetrieb muß der Luftraum 36 oberhalb des Druckventils 30 hingegen mit dem Umgebungsdruck (Rohrleitung 8) verbunden sein, weil der Elektromagnet 34 es sonst nicht schaffen würde, das Druckventil 30 zu heben.

Die Umschaltung zwischen den Betriebsarten erfolgt auf Veranlassung eines Programms und gesteuert durch die Kraftwerksleittechnik immer in zwei Schritten: Zuerst wird der Raum 36 von dem Raum abgetrennt, mit dem er bisher verbunden war (ein Kegelstumpf-Körper 28 schließt). Danach wird er mit dem Raum 8' oder 7' (s. Fig. 6) verbunden, mit dem er bisher nicht verbunden war (der andere Kegelstumpfkörper 28 öffnet). Beim Umschaltvorgang geht Druckluft und damit Energie verloren, die proportional zum Volumen des Raumes 36 ist. Daher wird dieser Raum 36 möglichst klein gehalten. Die Trennung des Raumes 36 vom Arbeitsspeicher 7' bzw. von der Umgebungsluft 8' wird durch je einen der kegelstumpfförmigen Körper 28 im Zentrum der entsprechenden Scheibe 27 mit einem Gewinde an ihrer Außenseite bewirkt. Der kegelstumpfförmige Körper 28 wird in eine kegelstumpfförmige Öffnung gedrückt. Dies erfolgt durch je einen Stellmotor 25, s. Fig. 3, der über ein Planetengetriebe 26 die (den kegelstumpfförmigen Verschluss tragende) Scheibe 27 dreht, so dass das Gewinde an ihrer Außenseite in einem entsprechenden Gewinde an der Innenseite des Gehäuses der Umschaltvorrichtung 24 wie eine Schraube in einer Mutter gleitet. Das Gewinde ist hinsichtlich Windungszahl, Steigung, Haftreibungskoeffizient etc. im Verhältnis zur Öffnung des Verschlusses so ausgelegt, dass der maximale Arbeitsdruck gegen den Umgebungsdruck zuverlässig abgedichtet wird, kurz gesagt dichtet die Haftreibung und die Windungszahl des Außengewindes der großen Scheiben 27 den maximalen Druck zuverlässig gegen den Umgebungsdruck ab.

Die Blindleistung bleibt in der Anlage. Sie pendelt zwischen Kapazität und Induktivität hin und her. Von außen wird nur dem Ersatzwiderstand Wirkleistung zugeführt bzw. von der Ersatzspannungsquelle Wirkleistung abgegeben.

Um die Wirbelstromverluste und die Ummagnetisierungsverluste zu minimieren, sind alle mechanisch festen Teile mit Ausnahme der Spulenwicklungen 6 und 15, des magnetischen Kerns 18 und von 15 und der elektromagnetischen Ventilsteuerung (34,35) aus elektrisch nicht leitendem Material (z.B. Keramik) ausgeführt. Dazu zählt auch die in der Zeichnung nicht dargestellte mechanische Halterung bzw. Aufhängung der Maschine. Die Aufhängung kann alternativ auch aus Holz und Ziegelmauerwerk ausgeführt sein.

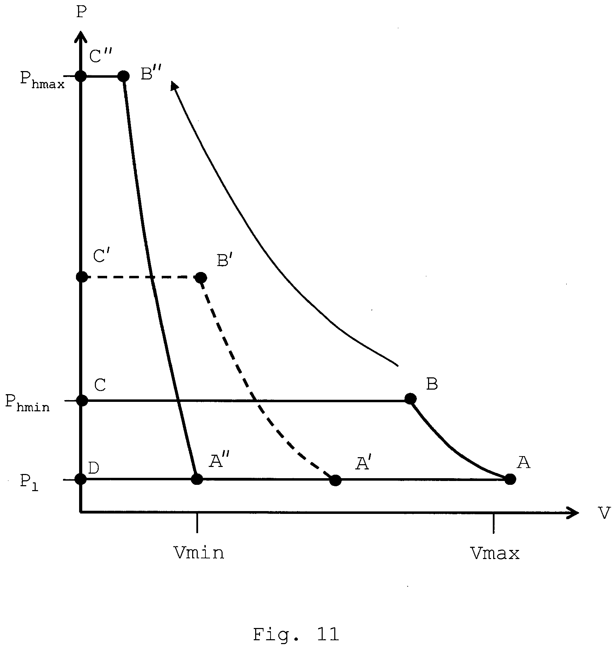

Das beschrieben System ist eine Wärmekraftmaschine. Der thermodynamische Kreisprozess ist in Fig.11 dargestellt. Die einzelnen Arbeitsschritte sind ganz allgemein:
Polytrope Kompression (A-B)
Isobare Kompression (B-C)
Isochore Druckänderung (C-D)
Isobare Expansion (D-A)

Das Volumen V wird bei niedrigen Druck pl (=1 bar) so geregelt, dass das Flächenintegral des Kreisprozesses (Arbeit pro Kolbenhub) während der Beladung des Druckluftspeichers 2 im Pumpbetrieb mit kontinuierlichem Anstieg des Arbeitsdrucks von Phmin (z.B. 100bar) bis Phmax (z.B. 1000bar) konstant gehalten wird und folglich die Kolbenpumpe 200 eine konstante elektrische Leistung aufnimmt. Das Viereck, das beim Kreisprozess durchlaufen wird, verändert während des Ladevorgangs seine Form, aber nicht seinen Flächeninhalt. Am Beginn des Ladevorgangs ist es breit und niedrig (A-B-C-D), während des Ladevorgangs wird es schmäler (A'-B'-C'-D) und höher, am Ende ist es am schmälsten und höchsten (A"-B"-C"-D), wie in Fig. 11 dargestellt.

Bei der Entladung des Druckluftspeichers 2 während des Generatorbetriebs nimmt der Arbeitsdruck im Druckluftspeicher 2 kontinuierlich ab. Um die Leistung im Generatorbetrieb konstant zu halten, wird der Arbeitsdruck - z.B. mit Hilfe eines in der Zeichnung nicht dargestellten Drosselventils - auf einen fixen Wert (z.B. 100 bar) heruntergedrosselt. Das Viereck, das beim Kreisprozess im Generatorbetrieb durchlaufen wird hat stets dieselbe Form.

Durch die geeignete Wahl der Konstruktion und/oder der Betriebsparameter kann der Wärmeübergang zwischen dem Hubraum 29 und der Umgebung verändert werden, so dass der polytrope Prozess der Kompression/Expansion sich mehr oder weniger einem isothermen Prozess annähert und dadurch der Wirkungsgrad des Systems mehr oder weniger verbessert werden kann. Ein höherer Wirkungsgrad kann u.a. mit einer geringeren Leistung/längeren Ladezyklen erkauft werden oder umgekehrt.

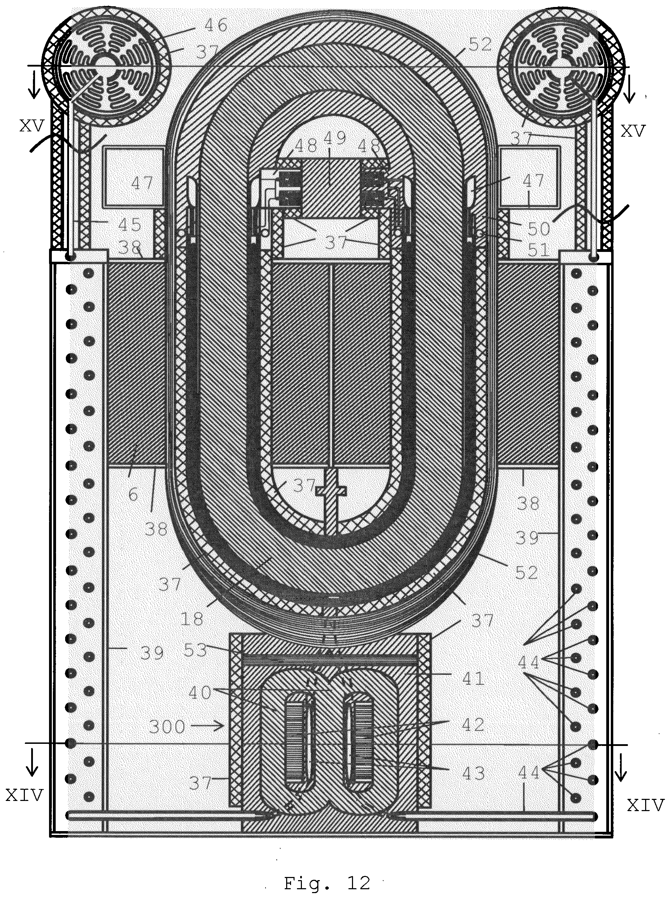

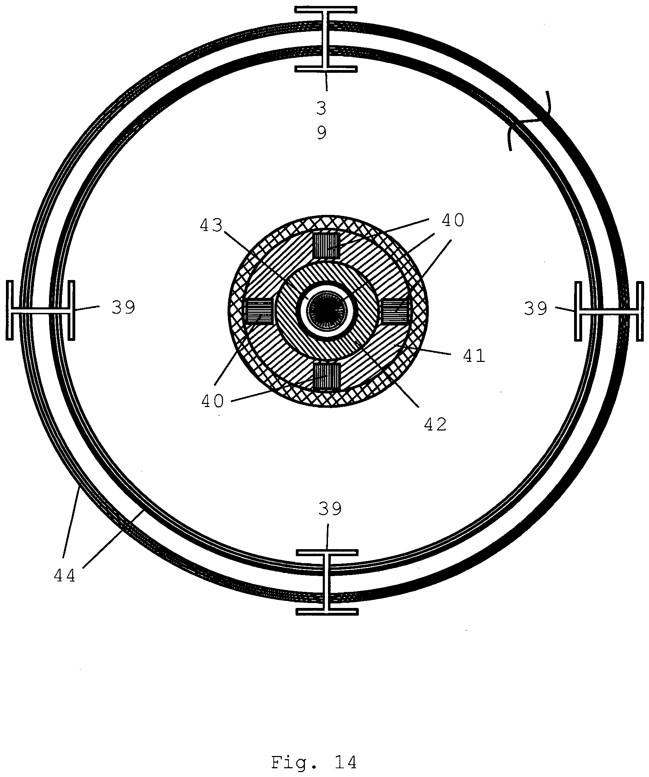

Fig.12 zeigt eine Darstellung der Maschine in kompakter Bauweise. Alle druckführenden Teile der Anlage sind so geformt, daß sie mit Fasern (z.B. Glasfasern, Keramikfasern oder Basaltfasern) mehrlagig (z.B. 40-60 Lagen) umwickelt werden können. Bei der Herstellung ist nach jeder Lage Faserwicklung die Aufbringung einer aushärtenden Matrix (z.B. Beton bei Glasfaserwicklungen oder eine Siliziumkarbidmatrix bei Siliziumkarbidfasern) vorgesehen, die die Zwischenräume zwischen den Fasern ausfüllt und sich beim Aushärten mit der darunterliegenden Schicht verbindet. Die Querschnitte der mehrlagigen Wicklungen 37 sind gekreuzt schraffiert eingezeichnet. Ein kastenförmiger Bauteil 38 ist mit der Maschine und mit den vier äußeren Standbeinen 39 fest verbunden. Der Kasten 38 umgibt und trägt die elektrischen Spulen 6. Eine Umwälzpumpe 300 befindet sich mittig unter der Maschine und ist mit dieser fest verbunden. Sie besteht aus einem weichmagnetischen Kern 40, der in eine Matrix 41 eingegossen ist, aus einer elektrischen Spule 42, die um den inneren Teil des Kerns 40 gewickelt ist und aus einem Spalt 43 zwischen dem inneren Teil des Kerns 40 und der elektrischen Spule 42. Der innere Teil des magnetischen Kerns 40 teilt sich oben und unten in vier Stränge ähnlich einem vierblättrigen Kleeblatt. Die magnetischen Feldlinien schließen sich entlang dieser vier Stränge (siehe auch Fig.14). Der Verlauf der magnetischen Feldlinien der Umwälzpumpe 300 ähnelt den Strahlen eines vierstrahligen Springbrunnens. Der Spalt 43 teilt sich nach oben und nach unten ebenfalls in vier Stränge so daß die Kolbenflüssigkeit in vier Teilströmen zwischen den vier Strängen des magnetischen Kerns durchfliessen kann. Die vier Teilströme der Kolbenflüssigkeit treten am unteren Ende der Umwälzpumpe in den wendelförmigen Wärmetauscher 44 ein, strömen nach außen und dann - von den Standbeinen 39 getragen - in vier separaten parallelen äußeren Wendeln nach oben bis zu einem Umkehrpunkt und von dort in vier separaten inneren Wendeln wieder nach unten bis sie wieder den Bereich der Standbeine nach innen verlassen und am unteren Ende in die Maschine einmünden. Der Umkehrpunkt ist nicht ganz am oberen Ende der Standbeine 39 sondern unterhalb. Es gibt einige Wendeln oberhalb dieses Umkehrpunkts, die wie eine "Sackgasse" oben in die Leitung 45 zum Hubraumregler 46 münden. In dieser "Sackgasse" befindet sich das Regelvolumen der Kolbenflüssigkeit. Auf diesem Regelvolumen schwimmt eine hydraulische Flüssigkeit mit einem deutlich geringeren spezifischen Gewicht. Die hydraulische Flüssigkeit erfüllt auch den inneren komprimierbaren Bereich des Hubraumreglers 46. Der Bereich 47 verbindet das Saugventil mit der Umgebungsluft. Er besteht aus einem inneren und einem äußeren Bereich. Der äußere Bereich 47 ist eine breite ringförmig um den Magnetkern verlaufende Rohrleitung. Zwischen dem inneren und dem äußeren Bereich 47 tritt die Luft durch vertikale parallele Schlitze im massiven Keramikkörper 50. Die Umschaltevorrichtung 48 zur Umschaltung zwischen Pumpbetrieb und Generatorbetrieb ist so konstruiert, daß sie in einen Zylinder passt und mit Fasern umwickelt werden kann. Der Zylinder ist ein massiver keramischer Bauteil in dem zwei große Bohrungen und einige dünne Rohrleitungen freigelassen sind. In jeder Bohrung befindet sich ein elektrischer Stellmotor, ein Planetengetriebe und ein kegelstumpfförmiger Verschluss. Im Zentrum der Umschaltevorrichtung befindet sich ein massiver Block 49, der nach der Montage der Stellmotoren eingefügt wird um dem Arbeitsdruck in den Hohlräumen der Umschaltevorrichtung nach rechts und nach links Widerstand zu leisten. Der Transport der komprimierten Luft zu und von der Maschine erfolgt über eine ringförmige Druckleitung 51, die als ringförmiger Hohlraum im Inneren eines massiven Keramikkörpers 51 freigelasen wird. Der stadionförmige Korpus der Maschine ist außen parallel zur Mittelachse des Magnetkerns mit mehreren Lagen Seilen 52 (z.b. aus Glasfaser, Keramikfaser oder Basaltfaser) umwickelt, die in einer ausgehärteten Matrix (z.B. Beton oder Siliziumkarbid) eingebettet sind. Unterhalb der Seilwicklung 52 wird ein Teil 53 eingefügt, der den Spalt schließt, durch den das Seil beim Wickeln eingefädelt wurde. Die Seile 52 nehmen die Zugspannung auf, die zwischen den Teilbereichen oberhalb und unterhalb des Hubraums während des Betriebs entstehen.

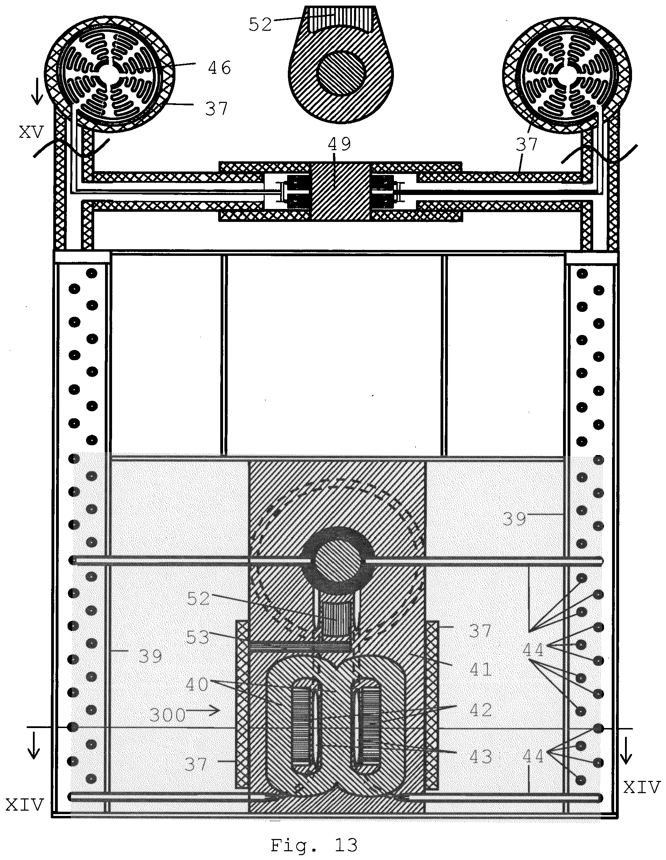

Fig.13 zeigt ebenfalls eine Darstellung der Maschine in kompakter Bauweise jedoch ist die Ansicht gegenüber Fig. 12 um 90 Grad gedreht. Dort wo in Fig. 12 die Umschaltevorrichtung zwischen Pumpbetrieb und Generatorbetrieb zu sehen war befindet sich in Fig. 13 eine ähnlich aufgebaute Umschaltevorrichtung. Diese dient zur wahlweisen Verbindung des Hubraumreglers mit dem Arbeitsdruck bzw. mit dem Umgebungsdruck.

Fig.14 zeigt einen Querschnitt durch die Umwälzpumpe. Im Zentrum befindet sich der magnetische Kern 40 mit sternförmigem Querschnitt. Nach aussen teilt sich der magnetische Kern in vier Stränge mit einem Querschnitt aus parallelen Lamellen (wie geschichtetes Trafoblech). Entlang dieser vier Stränge schliessen sich die magnetischen Feldlinien (vgl. Fig.12 und Fig.13). Der Kern 40 ist eingegossen in einem Keramikkörper 41. Um den inneren Kern herum befindet sich die elektrische Spule 42 der Umwälzpumpe. Vor der Wicklung der elektrischen Spule 42 ist der Körper 41 nicht kompakt sondern umgibt bloß die vier Stränge 40 des Magnetkerns. Dazwischen ist er offen und gibt einen Zugang frei zu einem Hohlraum, der mit dem elektrischen Draht der Wicklung 42 dann ausgefüllt wird. Nachdem die Wicklung 42 hergestellt ist, werden die verbleibenden Freiräume des Körpers 41 gefüllt so daß ein kompakter Körper entsteht und die Wicklung 42 nicht mehr von aussen zugänglich ist. Zwischen der Spule 42 und dem magnetischen Kern 40 ist ein ringförmiger Spalt freigelassen durch den die Kolbenflüssigkeit fliesst. Dieser ringförmige Spalt 43 teilt sich nach oben und nach unten in vier Stränge, die um 45 Grad versetzt zwischen den Strängen des magnetischen Kerns senkrecht verlaufen. Die vier Stränge münden unten in vier Leitungen die radial nach aussen zu den vier Standbeinen 39 streben. Ab dort laufen die vier Leitungen wendelförmig nach oben.

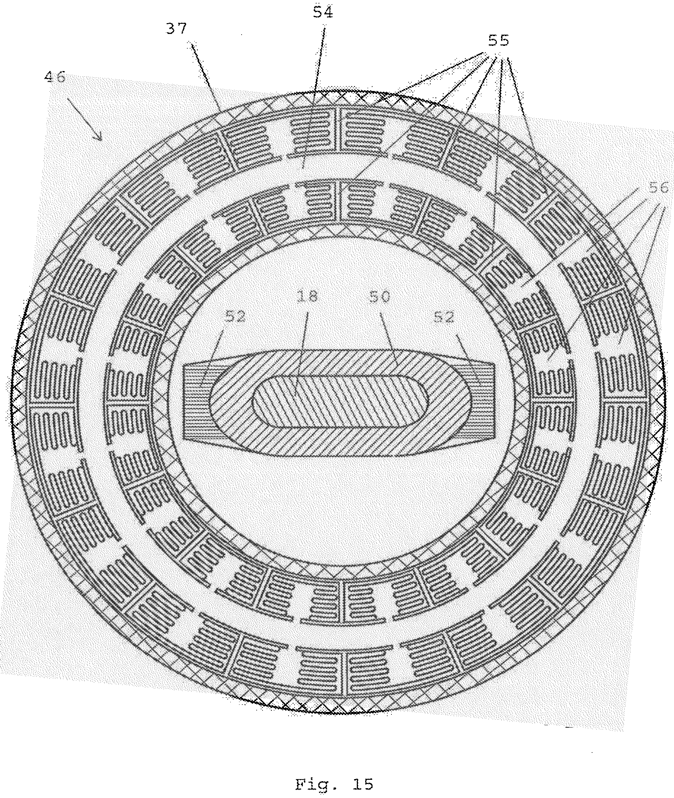

Fig.15 zeigt einen Querschnitt durch den verbesserten Hubraumregler 46. Im Gegensatz zum Grundpatent ist er hier nicht als Diskus sondern als Torus ausgeführt. Das hat den Vorteil, daß er mit Fasern 37 umwickelt werden kann um den Zugspannungen besser standzuhalten. Entlang der Achse des Torus 46 verläuft eine innere Ringleitung 54. Der Bereich außerhalb der Ringleitung 54 ist durch Trennwände 55 in Segmente unterteilt. Jeds Segment enthält ein elastisch komprimierbares Volumen 56, dessen Rand eine ähnliche Form aufweist wie ein Blasebalg bzw. wie eine Ziehharmonika. Die Volumina 56 sind nach innen zur Ringleitung 54 hin offen. Die Ringleitung 54 ist ihrerseits über senkrechte Leitung 45 mit dem oberen Ende des wendelförmigen Kühlkörpers verbunden in dem sich die Kolbenflüssigkeit befindet. Sowohl die Ringleitung 54 als auch die Volumina 56 sind mit Hydrauliköl gefüllt. Das Hydrauliköl schwimmt auf der Kolbenflüssigkeit wegen seines geringeren spezifischen Gewichts. Der Raum ausserhalb der Blasebälge 56 ist mit Luft gefüllt. Dieser Luftraum ist während des Betriebs mit dem Arbeitsdruck verbunden und drückt die Bälge 56 je nach Arbeitsdruck mehr oder weniger zusammen. Dadurch wird mehr oder weniger Hydrauliköl durch die Leitung 45 nach unten gedrückt was wiederum den Pegel der Kolbenflüssigkeit und damit den Hubraum in der Maschine regelt.

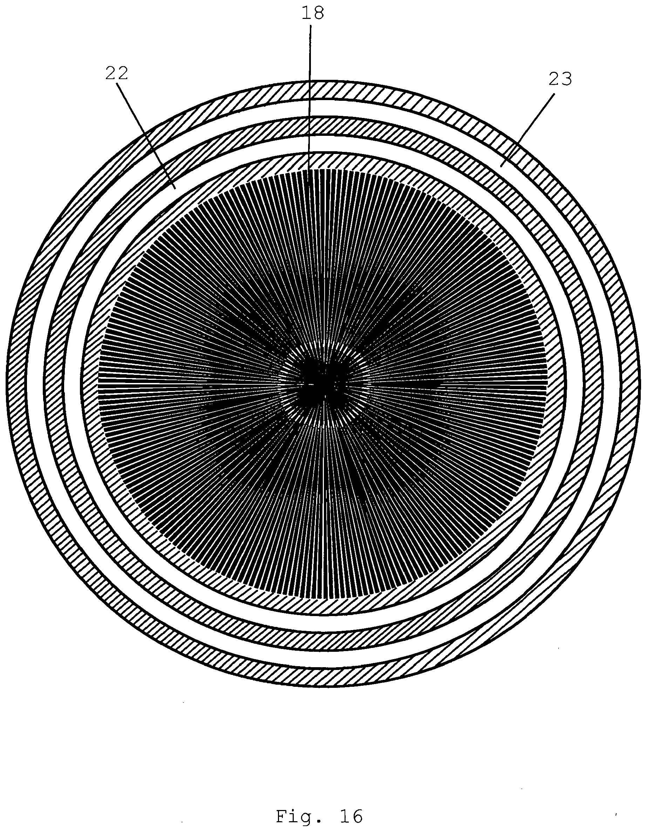

Fig.16 zeigt einen Querschnitt durch einen Arm der Maschine. Der magnetische Kern 18 ist hier nicht gewickelt sondern in einen Hohlraum des Keramikkörpers eingegossen. Um die Verluste zu minimieren ist der Kern sternförmig. Beim Herstellungsprozess wurde dazu ein sternförmiger Hohlraum im Inneren des Keramikteils freigelassen. Weiters sind der innere Spalt 22 und der äussere Spalt 23 dargestellt.

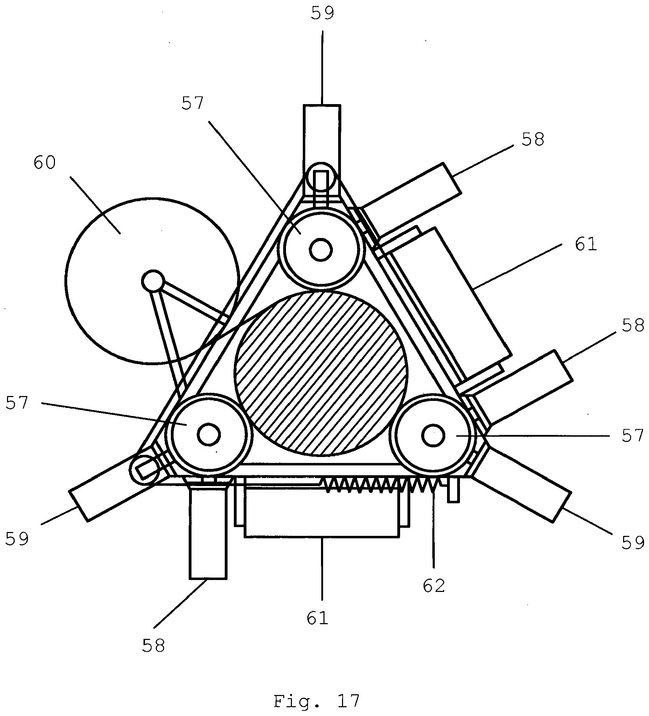

Fig.17 zeigt ein Ausführungsbeispiel einer Wickelmaschine zur Bewicklung der druckführenden Teile mit Fasern. Im dargestellten Beispiel ist die Wickelmaschine in Form eines Dreiecks ausgeführt. Sie könnte aber auch als Viereck, allgemein als Polygon oder als Ring ausgeführt sein. Sie könnte insbesondere auch an einer Seite offen sein und in Form einer Zange ausgeführt sein. In diesem Fall wäre nicht nur eine Umwicklung sondern auch die Herstellung eines Fasergewebes mit Hilfe einer zweiten - nicht dargestellten - Maschine in der Art eines mechanischen Webstuhls möglich. Die dargestellte Wickelmaschine hat 6 Räder in Form von drei Räderpaaren 57 die fest auf dem zu bewickelnden Rohr aufsitzen. Jedes Räderpaar 57 ist über Zahnräder mit zwei Elektromotoren verbunden, die über Funk ferngesteuert werden. Die Motoren können je eine SIM-Karte tragen und über Mobilkommunikation (Machine-to-Machine) gesteuert werden. Einer der beiden Motoren 58 treibt das Räderpaar an, der andere (Stell)motor 59 lenkt es. Die Lenkung kann durch ein zwischen Stellmotor 59 und Räderpaar 57 befindliches Getriebe untersetzt werden. Um einen gekrümmten Torus gleichmässig bewickeln zu können müssen alle Räderpaare unabhängig voneinander unterschiedlich gelenkt werden. Die Faser ist auf einer Rolle 60 aufgewickelt, die mit der Wickelmaschine fest verbunden ist. Von dieser Rolle wird die Faser während des Bewicklungsvorgangs abgewickelt. Zwei Akkus 61 liefern die nötige Energie. Die Seiten des Dreiecks sind in der Länge variabel um sich an unterschiedliche Querschnitte anzupassen. Eine einstellbare Feder 62 oder eine Spindel (nicht dargestellt) sorgt für den erforderlichen gleichbleibenden Anpressdruck der Räderpaare auf der Oberfläche des Rohres.

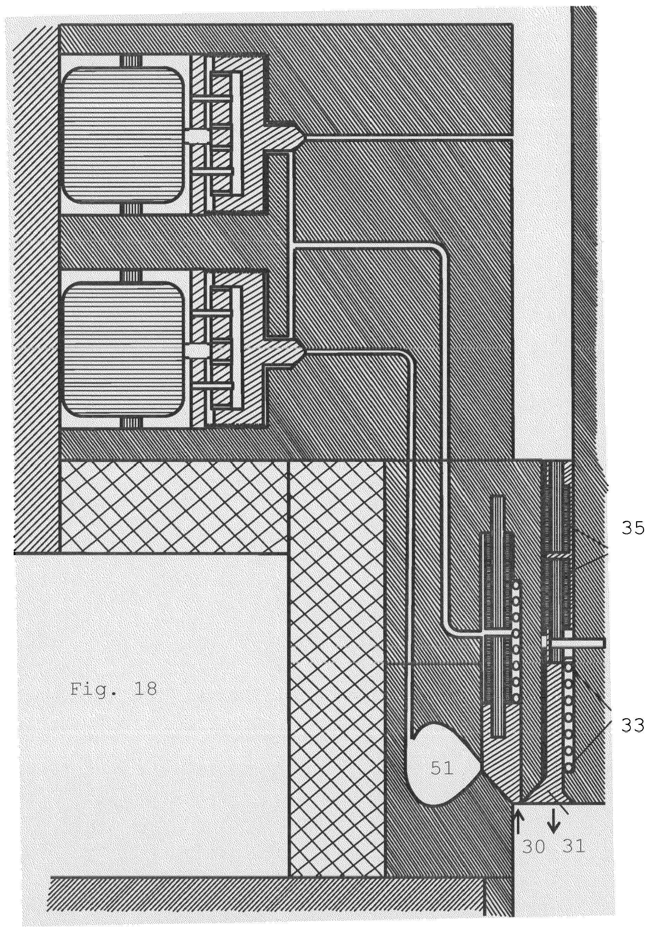

Fig.18 zeigt die Umschaltevorrichtung. Sie besteht aus zwei horizontalen zylinderförmigen Fortsätzen, die vom stadionförmigen Körper der Maschine nach innen reichen. In diesen Fortsätzen sind je zwei zylinderförmige Hohlräume freigelassen, die übereinander angeordnet sind. Diese sind miteinander sowie mit dem Arbeitsdruck, mit dem Umgebungsdruck und dem Raum oberhalb des Druckventils über dünne Leitungen verbunden. Diese dünnen Leitungen dienen - ähnlich der eustachischen Röhre im menschlichen Ohr - dem Druckausgleich. In beiden Bohrungen befindet sich ein Stellmotor, der über ein Planetengetriebe einen kegelstumpfförmigen Verschluss bewegt. Beim Umschalten zwischen Pumpbetrieb und Generatorbetrieb muss der Raum oberhalb des Druckventils wahlweise mit dem Arbeitsdruck oder mit Umgebungsdruck verbunden werden. In Fig. 18 sind beide Ventile in geschlossener Position dargestellt.

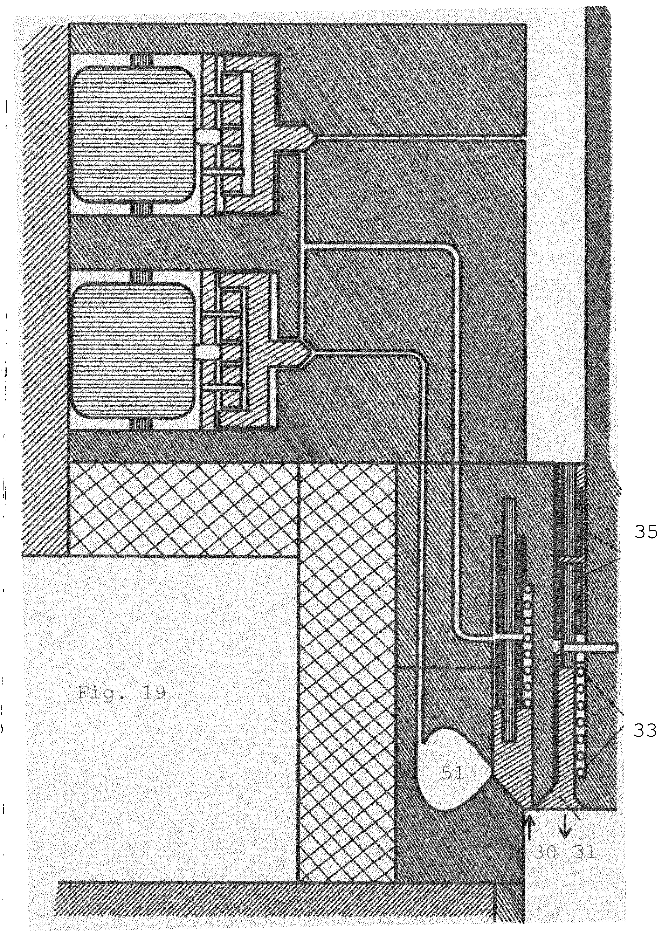

Fig. 19 zeigt dieselbe Anordnung wie Fig.18 aber mit dem unteren Ventil in geöffneter Stellung. Jetzt ist der Raum über dem Druckventil mit dem Arbeitsdruck verbunden. Die Maschine ist im Pumpbetrieb. Beide Hohlräume in der Umschaltevorrichtung sind ebenfalls mit dem Arbeitsdruck verbunden.

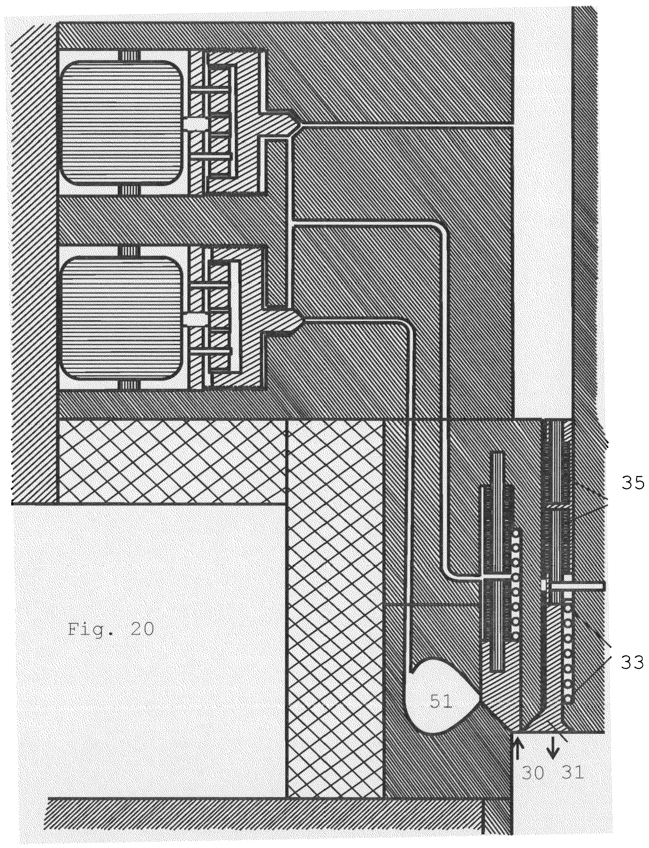

Fig.20 zeigt dieselbe Anordnung wie Fig.18 aber mit dem oberen Ventil in geöffneter Stellung. Jetzt ist der Raum über dem Druckventil mit Umgebungsdruck verbunden. Die Maschine ist im Generatorbetrieb. Beide Hohlräume in der Umschaltevorrichtung sind ebenfalls mit Umgebungsdruck verbunden.
Die Umschaltevorrichtung ist speziell dadurch gekennzeichnet daß die beiden größeren Hohlräume in denen sich die Stellmotoren befinden immer denselben Druck aufweisen - entweder Arbeitsdruck oder Umgebungsdruck. Dadurch werden Spannungen im Inneren der Umschaltevorrichtung vermieden.

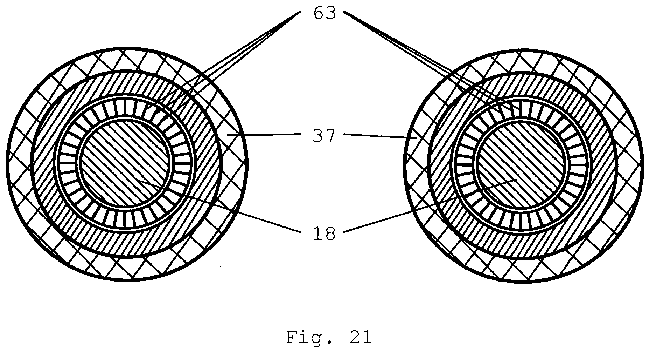

Fig.21 zeigt eine Vorrichtung zur Verbesserung des Wirkungsgrads der Maschine: Im Hubraum sind strahlenförmig senkrechte Lamellen 63 angeordnet. Diese reichen nach oben bis zu den Ventilen und nach unten so weit, daß sie immer in der Kolbenflüssigkeit eingetaucht sind, jedoch nicht bis unter die Oberkante der elektrischen Hauptspulen 6 weil sonst der ringförmige Stromfluss in der Kolbenflüssigkeit unterbrochen wäre. Die Lamellen 63 sollen eine hohe Wärmeleitfähigkeit und eine hohe Wärmekapazität aufweisen. Je mehr Lamellen im Hubraum desto größer ist Oberfläche und damit verbessert sich der Wärmeübergang zwischen der Luft und der Kolbenflüssigkeit. Der thermodynamische Prozess wird weniger adiabat und mehr isotherm insbesondere wenn die Luft mehrmals im Hubraum komprimiert und expandiert wird bevor sie über das geöffnete Druckventil in den Speicher strömt.
Das Material der Lamellen kann z.B. aus Keramik bestehen und es kann z.B. dasselbe Material wie der kompakte Keramikkörper sein. In diesem Fall werden die Lamellen beim Drucken des kompakten Keramikkörpers in einem gemeinsamen Arbeitsgang hergestellt und sind mit diesem fest verbunden.

Das Material der Lamellen kann z.B. aus Metall, z.B. aus Wolfram bestehen. In diesem Fall werden die Lamellen nach der Fertigung des kompakten Keramikkörpers in dafür vorgesehene vertikale Schlitze seitlich eingeschoben und danach die Schlitze fest verschlossen.

## Patentansprüche

1. Druckluftspeicherkraftwerk (100) mit einem elektrischen Eingangs-/Ausgangskreis (4), Kompressor- und Expansionsmitteln und einem künstlich hergestellten Druckluftspeicher (2), wobei die Kompressor- und Expansionsmittel eine Kolbenpumpe (200) aufweisen, die zwischen einem Pumpbetrieb und einem Generatorbetrieb umschaltbar ist, **dadurch gekennzeichnet, dass** die Kolben der Kolbenpumpe (200) aus einer elektrisch und thermisch leitfähigen Flüssigkeit, z.B. Galinstan, bestehen, dass Elektromagnete mit Kern (18) und Spulen (6) zum induktiven Antreiben der leitfähigen Flüssigkeit vorgesehen sind, und dass der Kern (18) eine geschlossene Schleife bildet, die zwei parallele gerade Zylinder-Teile (18A, 18B) enthält, um die die Spulen (6) gewickelt sind.

2. Druckluftspeicherkraftwerk nach Anspruch 1, **dadurch gekennzeichnet, dass** zwischen dem magnetischen Kern (18) und den Spulen (6) ein Spalt (19) freigelassen ist, in dem sich die leitfähige Flüssigkeit nach der Art eines kommunizierenden Gefäßes auf und ab bewegt.

3. Druckluftspeicherkraftwerk nach Anspruch 2, **dadurch gekennzeichnet, dass** eine Trennwand (21) den Spalt (19) zwischen dem Kern (18) und den Spulen (6) in einen inneren, näher dem Kern (18) gelegenen Spalt (22) und einen äußeren, näher den Spulen (6) gelegenen Spalt (23) unterteilt, wobei die Trennwand (21) an den beiden oberen Enden der parallelen Kern-Teile (18A, 18B) endet, so dass die leitfähige Flüssigkeit von einem Spalt (22, 23) in den anderen Spalt (23, 22), unter Bildung eines Hubraums (29), fließen kann.

4. Druckluftspeicherkraftwerk nach einem der Ansprüche 1 bis 3, **dadurch gekennzeichnet, dass** das Volumen der leitfähigen Flüssigkeit in einem Zylinderraum der Kolbenpumpe (200), dem Hubraum (29), regelbar ist, wobei die Leistungsaufnahme während der Druckluftspeicherung konstant ist.

5. Druckluftspeicherkraftwerk nach Anspruch 4, **dadurch gekennzeichnet, dass** die leitfähige Flüssigkeit mit einem Reservoir (14) verbunden ist, dessen Volumen abhängig vom Luftdruck im Druckluftspeicher (2) mittels eines Untersetzungs-Druckwandlers (9) und einer hydraulischen Flüssigkeit (10) änderbar ist, wobei die hydraulische Flüssigkeit (10) gegen zumindest eine federnd ausgeführte Grenzfläche, z.B. eine Membran (11), drückt, auf deren anderer Seite sich das Reservoir (14) der leitfähigen Flüssigkeit befindet.

6. Druckluftspeicherkraftwerk nach einem der Ansprüche 1 bis 5, **dadurch gekennzeichnet, dass** die Kolbenpumpe (200) vollständig in einer Flüssigkeit, z.B. Wasser, eingetaucht ist, die als Wärmespeicher (3) fungiert, wobei vorzugsweise eine Umwälzpumpe (15) die leitfähige Flüssigkeit im Betrieb ständig in einem geschlossenen Kreislauf umwälzt und ein Wärmeaustausch zwischen der leitfähigen Flüssigkeit und dem Wärmespeicher (3) stattfindet.

7. Druckluftspeicherkraftwerk nach Anspruch 6 mit Anspruch 3, **dadurch gekennzeichnet, dass** je eine Induktions-Umwälzpumpe (15) unterhalb der beiden Kern-Teile (18A, 18B) in jedem Halbtakt aus dem äußeren Spalt (23) leitfähige Flüssigkeit periodisch und synchron absaugt und induktiv durch den Wärmetauscher (3) treibt und schließlich in den inneren Spalt (22) wieder hineindrückt.

8. Druckluftspeicherkraftwerk nach einem der Ansprüche 5 bis 7, **dadurch gekennzeichnet, dass** das Reservoir (14), das das Volumen der leitfähigen Flüssigkeit regelt, gleichzeitig als Wärmetauscher (12) fungiert, wobei drei diskusförmig gewölbte Räume (14, 13, 14) aneinander angrenzend angeordnet sind, nämlich ein mittlerer Raum (13), dem die hydraulische Flüssigkeit (10) zugeführt wird, und beidseits hievon, durch die federnden Membranen (11) von ihm begrenzt, zwei Reservoir-Räume (14), die je von einer bauchig nach außen gewölbten Wand (14') aus einem gut wärmeleitenden und hochtemperaturfesten Material, z.B. Borsilikatglas, bestehen.

9. Druckluftspeicherkraftwerk nach Anspruch 7 und 8, **dadurch gekennzeichnet, dass** die Umwälzpumpen (15) die leitfähige Flüssigkeit am unteren Ende der Wärmetauscher (12 bzw. 16) hineinpumpen, wobei am oberen Ende die abgekühlte bzw. im Generatorbetrieb erwärmte leitfähige Flüssigkeit über eine Rohrleitung wieder in die Kolbenpumpe (15) zurückgeführt wird.

10. Druckluftspeicherkraftwerk nach einem der Ansprüche 1 bis 9, **dadurch gekennzeichnet, dass** die leitfähige Flüssigkeit durch eine wendelförmige Wärmetauscher-Rohrleitung (16) aus einem wärmeleitenden und hochtemperaturfesten Material, z.B. Borsilikatglas, innerhalb eines Wärmespeichers (3), ggf. des Flüssigkeits-Wärmespeichers, geführt wird.

11. Druckluftspeicherkraftwerk nach einem der Ansprüche 1 bis 10, **dadurch gekennzeichnet, dass** eine Druckrohrleitung (7), z.B. mäanderförmig, zwischen dem Druckluftspeicher (2) und der Kolbenpumpe (200) durch einen Wärmespeicher (3) verläuft, wobei Wärmeenergie von der Druckluft in das Wärmespeichermedium oder umgekehrt übertragen wird.

12. Druckluftspeicherkraftwerk nach einem der Ansprüche 1 bis 11, **dadurch gekennzeichnet, dass** ein Druckventil (30) und ein Saugventil (31) in Form von konzentrischen Ringen den magnetischen Kern (18) umschließen, wobei vorzugsweise der Luftraum über dem Saugventil (31) mittels einer Rohrleitung (8), die durch einen Wärmespeicher (3) führt, mit der Umgebung verbunden ist, wobei weiters vorzugsweise die Rohrleitung (8) innenseitig mit einer schalldämpfenden Beschichtung ausgestattet ist.

13. Druckluftspeicherkraftwerk nach einem der Ansprüche 1 bis 12, **dadurch gekennzeichnet, dass** der Druckluftspeicher (2) sowie gegebenenfalls der Wärmespeicher (3) und die Druckrohrleitung (7) von einer wärmeisolierenden Schicht (1) umgeben sind.

14. Druckluftspeicherkraftwerk nach einem der Ansprüche 1 bis 13, **dadurch gekennzeichnet, dass** alle mechanisch festen Teile mit Ausnahme von Spulen (6; 15), Kern (18) und einer magnetischen Ventilsteuerung (34, 35) aus elektrisch nicht leitendem Material, z.B. Keramik, ausgeführt sind, um Wirbelstromverluste und Ummagnetisierungsverluste zu minimieren, wobei weiters vorzugsweise die druckführenden Teile zur Verbesserung des Festigkeit mit Fasern bzw. Seilen in mehreren Lagen umwickelt sind.

15. Druckluftspeicherkraftwerk nach einem der Ansprüche 1 bis 14, **dadurch gekennzeichnet, dass** ein elektrischer Kondensator (5) vorgesehen ist, der z.B. als Plattenkondensator mit kammförmig ineinandergreifenden Platten ausgeführt ist, die durch ein Dielektrikum, z.B. Keramik, Glas oder Kunststoff, getrennt sind, wobei eine 220kV-Spannungsfestigkeit gegeben ist.

## Claims

1. A compressed air energy storage unit (100) having an electrical input/output circuit (4), compressor and expansion means an artificially created compressed air reservoir (2), wherein the compressor and expansion means comprise a piston pump (200) which is switchable between pumping operation and generator operation, **characterized in that** the pistons of the piston pump (200) consist of an electrically and thermally conductive liquid, e.g. galinstan, that electromagnets comprising a core (18) and coils (6) to inductively drive the conductive liquid are provided, and that the core (18) forms a closed loop comprising two parallel straight cylinder parts (18A, 18B), about which the coils (6) are wound.

2. The compressed air energy storage unit according to claim 1, **characterized in that** a gap (19) is left free between the magnetic core (18) and the coils (6), in which gap the conductive liquid is moving up and down in the nature of a communicating vessel.

3. The compressed air energy storage unit according to claim 2, **characterized in that** a partition wall (21) divides the gap (19) between the core (18) and the coils (6) into an internal gap (22) located closer to the core (18) and an external gap (23) located closer to the coils (6), wherein the partition wall (21) terminates at the two upper ends of the parallel core parts (18A, 18B), so that the conductive liquid may flow from one gap (22, 23) into the other gap (23, 22), forming a piston displacement (29).

4. The compressed air energy storage unit according to any one of claims 1 to 3, **characterized in that** the volume of the conductive liquid is controllable in a cylinder chamber of the piston pump (200), in the piston displacement (29), the power input being constant during the compressed-air storage.

5. The compressed air energy storage unit according to claim 4, **characterized in that** the conductive liquid is connected to a reservoir (14) the volume of which is variable by means of a reduction pressure transducer (9) and a hydraulic liquid (10) depending on the air pressure in the compressed air energy storage (2), wherein the hydraulic liquid (10) presses against at least one resilient boundary surface, e.g. a membrane (11), on the other side of which the reservoir (14) of the conductive liquid is located.

6. The compressed air energy storage unit according to any one of claims 1 to 5, **characterized in that** the piston pump (200) is completely immersed in a liquid, e.g. water, acting as heat accumulator (3), wherein preferably in operation a circulating pump (15) permanently circulates the conductive liquid in a closed circulation, wherein a heat exchange takes place between the conductive liquid and the heat accumulator (3).

7. The compressed air energy storage unit according to claim 6 with claim 3, **characterized in that** one induction circulating pump (15) each below the two core parts (18A, 18B) in each half-stroke periodically and synchronously sucks off conductive liquid from the external gap (23) and inductively drives it through the heat exchanger (3) and finally pushes it back into the internal gap (22).

8. The compressed air energy storage unit according to any one of claims 5 to 7, **characterized in that** the reservoir (14) controlling the volume of the conductive liquid simultaneously acts as heat exchanger (12), wherein three disk-shaped arched chambers (14, 13, 14) are disposed adjacent each other, i.e. a middle chamber (13), to which the hydraulic liquid (10) is supplied, and on both sides thereof, limited from it by the resilient membranes (11), two reservoir chambers (14), which are each comprised of by an outwardly arched wall (14') made of a material having a good thermal conductivity and a high-temperature resistance, e.g. borosilicate glass.

9. The compressed air energy storage unit according to claims 7 and 8, **characterized in that** the circulating pumps (15) pump in the conductive liquid at the lower end of the heat exchanger (12 or 16), whereby at the upper end the cooled conductive liquid or the conductive liquid heated in the generator operation is fed back again to the piston pump (15) via a pipeline.

10. The compressed air energy storage unit according to one any of claims 1 to 9, **characterized in that** the conductive liquid is directed through a helical heat exchanger pipeline (16) made of a thermally conductive and high-temperature resistant material, e.g. borosilicate glass, within a heat accumulator (3), as the case may be, within the liquid heat accumulator.

11. The compressed air energy storage unit according to one any of claims 1 to 10, **characterized in that** a pressure pipeline (7)extends, e.g. meanders between the compressed air reservoir (2) and the piston pump (200) through a heat accumulator (3), thermal energy being transferred from the compressed air into the heat accumulating medium or vice versa.

12. The compressed air energy storage unit according to any one of claims 1 to 11, **characterized in that** a pressure valve (30) and a suction valve (31) in the form of concentric rings enclose the magnetic core (18), wherein preferably the air space above the suction valve (31) is connected to the surroundings by means of a pipeline (8) extending through a heat accumulator (3), wherein further, preferably, the pipeline (8), on its inner side, is provided with a sound-deadening coat.

13. The compressed air energy storage unit according to any one of claims 1 to 12, **characterized in that** the compressed air reservoir (2) as well as, as the case may be, the heat accumulator (3) and the pressure pipeline (7) are surrounded by a thermally insulating layer (1).

14. The compressed air energy storage unit according to any one of claims 1 to 13, **characterized in that** all mechanically fixed parts, with the exception of coils (6; 15), core (18) and a magnetic valve control (34; 35) are made of an electrically non-conductive material, e.g. ceramics, to minimize the eddy current losses and losses due to reversed magnetization, wherein further, preferably, several layers of fibers or ropes are wound around the pressure-carrying parts to improve the strength.

15. The compressed air energy storage unit according to any one of claims 1 to 14, **characterized in that** an electric capacitor (5) is provided, which is designed as e.g. a plate capacitor having comb-like inter-meshing plates, which are separated by a dielectric, e.g. ceramics, glass or plastics, a 220kV electric strength being provided.

## Revendications

1. Centrale d'accumulation d'air comprimé (100) comprenant un circuit d'entrée/de sortie (4) électrique, des moyens formant compresseurs et de dilatation et un accumulateur d'air comprimé (2) fabriqué de manière artificielle, dans laquelle les moyens formant compresseurs et de dilatation présentent une pompe à piston (200), qui peut être commutée entre un mode de pompage et un mode générateur, **caractérisée en ce que** les pistons de la pompe à piston (200) sont constitués d'un liquide électroconducteur et thermoconducteur, par exemple du galinstan, **en ce que** des électroaimants comprenant un noyau (18) et des bobines (6) sont prévus afin d'entraîner par induction le liquide conducteur, et **en ce que** le noyau (18) forme une boucle fermée, qui contient deux parties de cylindre (18A, 18B) rectilignes parallèles, autour desquelles les bobines (6) sont enroulées.

2. Centrale d'accumulation d'air comprimé selon la revendication 1, **caractérisée en ce qu'**est laissé dégagé, entre le noyau (18) magnétique et les bobines (6), un interstice (19), dans lequel le liquide conducteur effectue des mouvements de va-et-vient à la manière d'un vase communicant.

3. Centrale d'accumulation d'air comprimé selon la revendication 2, **caractérisée en ce qu'**une paroi de séparation (21) divise l'interstice (19) entre le noyau (18) et les bobines (6) en un interstice (22) intérieur placé davantage à proximité du noyau (18) et en un interstice (23) extérieur placé davantage à proximité des bobines (6), dans laquelle la paroi de séparation (21) se termine au niveau des deux extrémités supérieures des parties de noyau (18A, 18B) parallèles de sorte que le liquide conducteur puisse s'écouler d'un interstice (22, 23) dans l'autre interstice (23, 22) en formant une cylindrée (29).

4. Centrale d'accumulation d'air comprimé selon l'une quelconque des revendications 1 à 3, **caractérisée en ce que** le volume du liquide conducteur peut être régulé dans une chambre de cylindre de la pompe à piston (200), la cylindrée (29), dans laquelle l'absorption de puissance est constante au cours de l'accumulation d'air comprimé.

5. Centrale d'accumulation d'air comprimé selon la revendication 4, **caractérisée en ce que** le liquide conducteur est relié à un réservoir (14), dont le volume peut changer en fonction de la pression d'air dans l'accumulateur d'air comprimé (2) au moyen d'un transducteur réducteur de pression (9) et d'un liquide (10) hydraulique, dans laquelle le liquide (10) hydraulique exerce une pression contre au moins une surface limite réalisée de manière élastique, par exemple une membrane (11), sur l'autre côté de laquelle se trouve le réservoir (14) du liquide conducteur.

6. Centrale d'accumulation d'air comprimé selon l'une quelconque des revendications 1 à 5, **caractérisée en ce que** la pompe à piston (200) est plongée en totalité dans un liquide, par exemple de l'eau, qui fait office d'accumulateur de chaleur (3), dans laquelle de préférence une pompe de circulation (15) met en circulation le liquide conducteur en fonctionnement en permanence dans un circuit fermé et un échange de chaleur a lieu entre le liquide conducteur et l'accumulateur de chaleur (3).

7. Centrale d'accumulation d'air comprimé selon la revendication 6 combinée à la revendication 3, **caractérisée en ce que** respectivement une pompe de circulation à induction (15) sous les deux parties de noyau (18A, 18B) évacue par aspiration de manière périodique et de manière synchrone du liquide conducteur hors de l'interstice (23) extérieur à chaque moitié de temps pour l'entraîner par induction à travers l'échangeur de chaleur (3) et, pour finir, le pousse à nouveau à l'intérieur de l'interstice (22) intérieur.

8. Centrale d'accumulation d'air comprimé selon l'une quelconque des revendications 5 à 7, **caractérisée en ce que** le réservoir (14), qui régule le volume du liquide conducteur, fait office dans le même temps d'échangeur de chaleur (12), dans laquelle trois chambres (14, 13, 14) bombées de manière à présenter une forme de disque sont disposées de manière adjacente les unes aux autres, à savoir une chambre centrale (13), à laquelle le liquide (10) hydraulique est amené et qui est délimitée, de part et d'autre, par les membranes (11) élastiques, deux chambres formant réservoirs (14), qui sont formées respectivement par une paroi (14') bombée vers l'extérieur à la manière d'un renflement composée d'un matériau à conduction thermique satisfaisante et résistant aux températures élevées, par exemple du verre de borosilicate.

9. Centrale d'accumulation d'air comprimé selon la revendication 7 et 8, **caractérisée en ce que** les pompes de circulation (15) pompent à l'intérieur le liquide conducteur au niveau de l'extrémité inférieure des échangeurs de chaleur (12 ou 16), dans laquelle le liquide conducteur refroidi ou réchauffé dans le mode générateur est ramené à nouveau dans la pompe à piston (15) par l'intermédiaire d'une conduite au niveau de l'extrémité supérieure.

10. Centrale d'accumulation d'air comprimé selon l'une quelconque des revendications 1 à 9, **caractérisée en ce que** le liquide conducteur est guidé à travers une conduite d'échangeur de chaleur (16) en forme d'hélice composée d'un matériau conducteur de chaleur et résistant à des températures élevées, par exemple du verre de borosilicate, à l'intérieur d'un accumulateur de chaleur (3), éventuellement de l'accumulateur de chaleur de liquide.

11. Centrale d'accumulation d'air comprimé selon l'une quelconque des revendications 1 à 10, **caractérisée en ce qu'**une conduite de pression (7), par exemple de forme sinueuse, s'étend à travers un accumulateur de chaleur (3) entre l'accumulateur d'air comprimé (2) et la pompe à piston (200), dans laquelle l'énergie de chaleur est transmise depuis l'air comprimé dans le milieu accumulateur de chaleur ou inversement.

12. Centrale d'accumulation d'air comprimé selon l'une quelconque des revendications 1 à 11, **caractérisée en ce qu'**une soupape de pression (30) et une soupape d'aspiration (31) se présentant sous la forme de bagues concentriques renferment le noyau (18) magnétique, dans laquelle de préférence la chambre d'air est reliée à l'extérieur par l'intermédiaire de la soupape d'aspiration (31) au moyen d'une conduite (8), qui mène à travers un accumulateur de chaleur (3), dans laquelle par ailleurs de préférence la conduite (8) est dotée côté intérieur d'un revêtement amortissant le bruit.

13. Centrale d'accumulation d'air comprimé selon l'une quelconque des revendications 1 à 12, **caractérisée en ce que** l'accumulateur d'air comprimé (2) ainsi que, le cas échéant, l'accumulateur de chaleur (3) et la conduite de pression (7) sont entourés d'une couche (1) thermiquement isolante.

14. Centrale d'accumulation d'air comprimé selon l'une quelconque des revendications 1 à 13, **caractérisée en ce que** toutes les parties fixes mécaniquement, à l'exception des bobines (6 ; 15), du noyau (18) et d'une commande de soupape (34, 35) magnétique, sont réalisées à partir d'un matériau non électroconducteur, par exemple de la céramique, afin de minimiser des pertes de courant de Foucault et des pertes de démagnétisation, dans laquelle par ailleurs de préférence les parties acheminant la pression sont enroulées de fibres ou de cordes en plusieurs couches afin d'améliorer la résistance.

15. Centrale d'accumulation d'air comprimé selon l'une quelconque des revendications 1 à 14, **caractérisée en ce qu'**est prévu un condensateur (5) électrique, qui est réalisé par exemple sous la forme d'un condensateur à plaques pourvu de plaques s'imbriquant les unes dans les autres de manière à présenter une forme de peigne, lesquelles sont séparées par un diélectrique, par exemple de la céramique, du verre ou une matière plastique, dans laquelle une aptitude à la résistance à la tension de 220 kV est de mise.
